# EUROPEAN PATENT APPLICATION

(11) **EP 1 447 896 A1**
(43) Date of publication of application: **18.08.2004**
(21) Application number: 03250949.9
(22) Date of filing: 17.02.2003
(51) Int. Cl.: H02J 7/00

(54) **Charging device with multi-step voltage charging source**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A charging device with a multi-step voltage charging source with means for taking active control over charging source voltage to further control its outputted charging current in the course of charging process executed by a (dis)chargeable storage discharging device so that when the charging from the (dis)chargeable storage discharging device arrives at a preset voltage, a primary control switch connected in series with a charging circuit is driven by the preset voltage to execute cutoff so to stop charging the (dis)chargeable storage discharging device.

## Description

### BACKGROUND OF THE INVENTION

### (a) Field of the Invention

The present invention relates to a charging device with a multi-step voltage charging source, and more particularly to one that has a (dis)chargeable storage discharging device on load side to be charged by the multi-step charging source up to preset voltage, then the charging status is taken over for smaller charging current by a charging source with higher voltage, or the charging current is cut off by operating a primary control switch connected in series with a charging circuit, or by turning the primary switch connected in series with a charging circuit to open circuit thus to cut off the charging to the (dis)chargeable storage discharging device.

### (b) Description of the Prior Art:

Conventional single step voltage charging source usually requires an analog resistance device known with high thermal loss for regulating and controlling its output voltage and current, or by means of a pulse-width-modulation (PWM) known with higher electromagnetic interruption (EMI) noise to regulate and control its output voltage and current. The charging device of a multi-step voltage charging source of the present invention reduces thermal loss and EMI noise level at the same time by having a multi-voltage as the charging source.

### SUMMARY OF THE INVENTION

The primary purpose of the present invention is to provide a charging device with a multi-step voltage charging source that has a (dis)chargeable storage discharging device on load side to be charged by the multi-step charging source up to preset voltage then the charging status is taken over for smaller charging current by a charging source with higher voltage, or the charging current is cut off by operating a primary control switch connected in series with a charging circuit, or by turning the primary switch connected in series with a charging circuit to open circuit thus to cut off the charging to the (dis)chargeable storage discharging device.

### BRIEF DESCRIPTION OF THE DRAWINGS

Fig.1 is a first block chart of a circuit of a charging device with a multi-step voltage charging source of the present invention;
Fig. 2 is a schematic view of a circuit of a primary control switch taken from Fig. 1 that is comprised of a solid analog or a switching device;
Fig. 3 is a schematic view of a circuit of a primary control switch taken from Fig. 1 that is comprised of a mechanic-electronic switching device;
Fig. 4 is a schematic view of a circuit of a primary control switch taken from Fig. 1 that is comprised of a constantly closed thermal temperature switch;
Fig. 5 is a schematic view of a circuit of the present invention having its primary control switch comprised of a gate voltage device SCR and its matching circuit device;
Fig. 6 is a schematic view of a circuit of the present invention having its primary control switch comprised of a gate voltage device SCR and an additional relay transistor;
Fig. 7 is a schematic view of a circuit of the present invention having its primary control switch comprised of a mechanic-electronic switch and its matching circuit device;
Fig. 8 is a schematic view of a circuit of the present invention having its primary control switch comprised of a mechanic-electronic switch gate voltage device SCR and an additional relay transistor;
Fig. 9 is a schematic view of a circuit of the present invention having its primary control switch comprised of a constantly closed thermal temperature switch and its matching circuit device;
Fig. 10 is a schematic view of a circuit of the present invention having its primary control switch comprised of constantly closed thermal temperature switch and an additional relay transistor;
Fig. 11 is a second block chart of a circuit of the charging device of the charging source with multi-step voltage charging source of the present invention;
Fig. 12 is a third block chart of a circuit of the charging device of the charging source with multi-step voltage charging source of the present invention;
Fig. 13 is a fourth block chart of a circuit of the charging device of the charging source with multi-step voltage charging source of the present invention;
Fig. 14 is a fifth block chart of a circuit of the charging device of the charging source with multi-step voltage charging source of the present invention;
Fig. 15 is a sixth block chart of a circuit of the charging device of the charging source with multi-step voltage charging source of the present invention;
Fig. 16 is a seventh block chart of a circuit of the charging device of the charging source with multi-step voltage charging source of the present invention;
Fig. 17 is a schematic view showing a preferred embodiment of the present invention by having its output terminal connected in parallel with divided current device with selectable conduction voltage;
Fig. 18 is a view showing an example of a circuit of the present invention comprised with the divided current device with selectable conduction voltage incorporated with a power transistor;
Fig. 19 is view showing another example of a circuit of the present invention comprised with the divided current device with selectable conduction voltage incorporated with a power transistor;
Fig. 20 is a view showing an example of a circuit of the present invention comprised of the divided current device with selectable conduction voltage incorporated with a gate voltage device;
Fig. 21 is a view showing another example of a circuit of the present invention comprised of the divided current device with selectable conduction voltage incorporated with a gate voltage device;
Fig. 22 is a schematic view of a circuit of a multi-step voltage DC source of two steps or more than two steps of the present invention comprised of multiple units of (dis) chargeable storage discharging device connected in series;
Fig. 23 is a schematic view of a circuit of a multi-step voltage DC source of two steps or more than two steps of the present invention comprised of common negative polarities of multiple units of (dis)chargeable storage discharging device;
Fig. 24 is a first preferred embodiment of a multi-step voltage charging source of the present invention comprised of single phase voltage transformer;
Fig. 25 is a second preferred embodiment of a multi-step voltage charging source of the present invention comprised of single phase voltage transformer;
Fig. 26 is a third preferred embodiment of a multi-step voltage charging source of the present invention comprised of single phase voltage transformer;
Fig. 27 is a fourth preferred embodiment of a multi-step voltage charging source of the present invention comprised of single phase voltage transformer;
Fig. 28 is a first preferred embodiment of a multi-step voltage charging source of the present invention comprised of three-phase voltage transformer;
Fig. 29 is a second preferred embodiment of a multi-step voltage charging source of the present invention comprised of three-phase voltage transformer;
Fig. 30 is a third preferred embodiment of a multi-step voltage charging source of the present invention comprised of three-phase voltage transformer;
Fig. 31 is a fourth preferred embodiment of a multi-step voltage charging source of the present invention comprised of three-phase voltage transformer;
Fig. 32 is a fifth preferred embodiment of a multi-step voltage charging source of the present invention comprised of three-phase voltage transformer; and,
Fig. 33 is a schematic view of a preferred embodiment of a multi-step voltage charging source with relay function of the present invention.

### DETAILED DESCRIPTION OF THE PREFERRED EMBODIMENTS

A charging device with a multi-step voltage charging source of the present invention has a (dis)chargeable storage discharging device on load side to be charged by the multi-step charging source up to preset voltage then the charging status is taken over for smaller charging current by a charging source with higher voltage, or the charging current is cut off by operating a primary control switch connected in series with a charging circuit, or by turning the primary switch connected in series with a charging circuit to open circuit thus to cut off the charging to the (dis)chargeable storage discharging device.

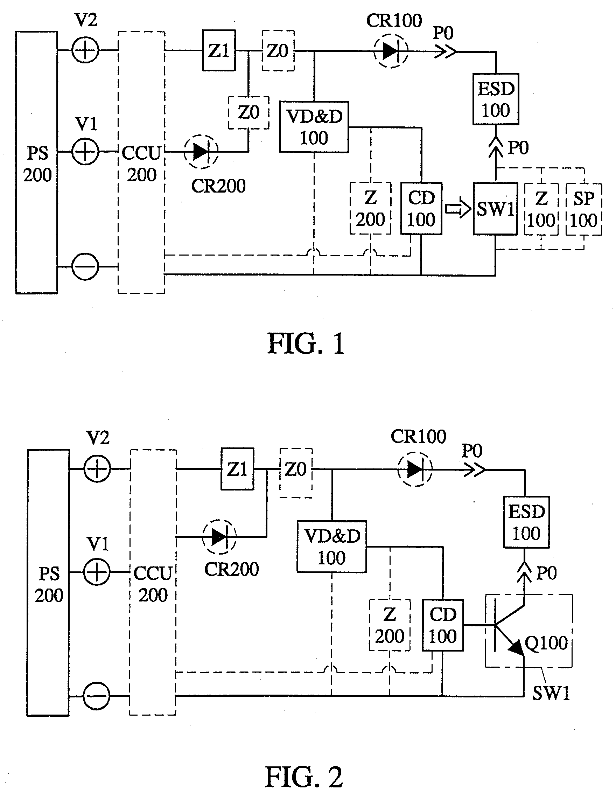

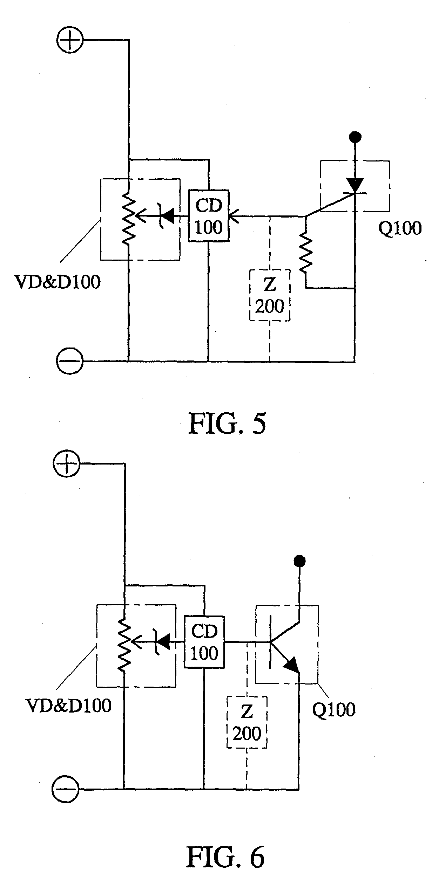

The charging device with multi-step voltage charging source uses a multi-step voltage charging source PS200 including two of more than two different voltages. Within, output terminals from the charging source PS200 with lower voltage step are respectively connected in series with an inverse voltage to prevent a diode CR200 and resistance devices Z0, Z1 respectively connected in series to jointly charge the (dis)chargeable storage discharging device BSD100. Fig. 1 showing a block chart of a circuit of the charging device of the multi-step voltage charging source of the present invention, essentially comprised of:
- a multi-step voltage charging source PS200: related to a multi-voltage DC source of two or more than two steps, or a DC source of multi-step voltage directly rectified by AC source, or a multi-step voltage DC source comprised of a secondary AC output terminal after transformation by a transformer then rectified; including at least two units of charging source of different voltages V1 with the lower voltage and V2 with higher voltage, or more than two multi-step voltage charging source of different voltages, and the multi-step charging sources of different voltages can be comprised of charging sources of the same or different current capacity connected in series of positive sequence polarity or sharing the common negative electrode or the common positive electrode for outputting to a load comprised of related charging control circuit through conduction connector and the (dis)chargeable discharging device BSD100;
- a central control unit CCU200: comprised of a drive circuit containing a mechanic-electronic switch or a solid-state power switch device to control conversion of DC output voltage and On-Off or timed cutoff, wherein, the central control unit CCU200 controls the operation of converting multi-step voltage DC source from the multi-step voltage charging source PS200 into a required multi-step voltage DC output voltage by its internal mechanic-electronic switch or solid-state power switch ; or controls the operation of a primary control switch SW1 comprised of a solid analog or switching device or a mechanic-electronic switching device or a constantly closed thermal temperature switch by controlling the drive circuit to execute On-Off operation or timed cutoff, thus further to control the On-Off operation of the charging DC source and the output of timed cutoff; the drive circuit being optional and is selected for all or partial functions;
- a (dis)chargeable discharging storage device ESD 100: comprised of a Ni-Cd, Ni-H, Ni-Zn, Ni-Fe or Lithium, or lead storage battery, or any other (dis)chargeable secondary battery functioning as a charging source or a load to be charged;
- a primary switch SW1: comprised of a solid analog or switching device or a mechanic-electronic switching device or a constantly closed thermal temperature switch, wherein,
   (1) The primary control switch SW1 being comprised of a solid-state analog or switching device Q100 related to an optional to be driven by a pilot drive device CD 100 comprised of a mechanic-electronic or solid-state electronic device for converting the primary control switch SW1 comprised of the solid-state analog or switching device Q100 into open circuit once the (dis) chargeable storage discharging device ESD 100 being charged up to the preset voltage; or further converting to control the operation of circuit break when indicating a state of analog characteristics of a selected device with gradually increase resistance in the course of voltage rise detection as in as illustrated in Fig. 2 for a schematic view showing that the primary control switch taken from Fig. 1 being comprised of a solid-state analog or switching device;

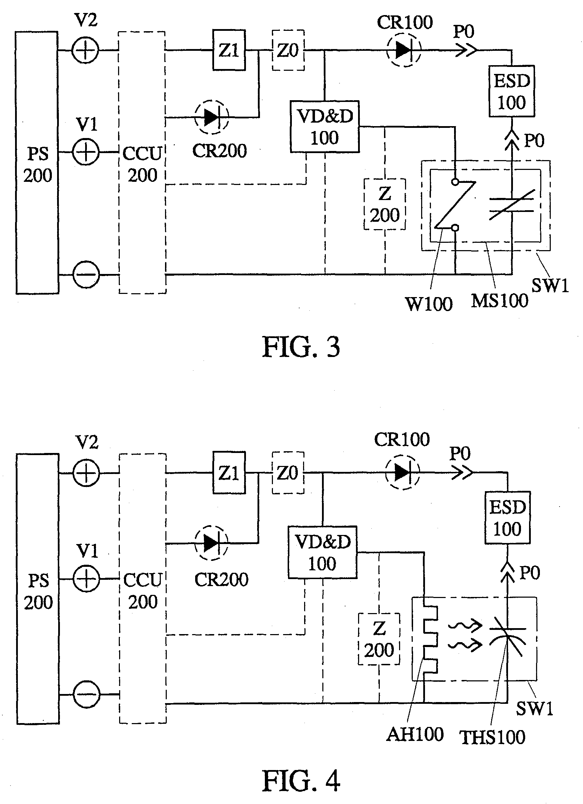

   (2) Fig. 3 showing that the primary control switch SW1 being comprised of a mechanic switching device MS 100 with its operation controlled by an electric energy driven coil W100; so that when the (dis)chargeable storage discharging device ESD 100 being charged up to the preset voltage, the electric energy driven coil W100 controls the operation of the primary control switch SW1 comprised of the mechanic-electronic switching device MS 100 to convert into break to cut off charging to the (dis)chargeable storage discharging device ESD100 as illustrated in Fig. 3 showing a schematic view of the circuit of the primary control switch taken from Fig. 1 being comprised of the mechanic-electronic switching device; and
   (3) As illustrated in Fig. 4 for a schematic view of a circuit of the primary control switch taken from Fig. 1 being comprised of a constantly closed thermal temperature switch, within, the primary control switch SW1 being comprised of the constantly closed thermal temperature switch THS 100 containing thermal bi-metal tab or memory alloy with equivalent function, a pilot drive function being executed by the primary control switch SW1 and an electric heating device AH100 coupled to the constantly closed thermal temperature switch THS100, and subject to control by preset voltage detection and drive circuit VD&D100 to convert the inputted electric energy into thermal energy so to heat and convert the coupled constantly closed thermal temperature switch THS 100 into an open circuit, thus to cut off the charging current to the (dis)chargeable storage discharging device ESD100; and once the temperature dropping to a critical temperature, a return being created to control the operation of the contact to return to a closed circuit;
- A resistance device Z0: related to a resistive device comprised of a mechanic-electric resistance device or a solid-state resistance device, a diode, or other resistive device that converts electric or thermal energy into optical, connected in series with the output terminal of the charging source V1 having the lower voltage to execute differential current limit with a load side; and the voltage limiting resistance device is provided or not as required by the circuit;
- a resistance device Z1: related to a resistive device comprised of a mechanic-electric resistance device or a solid-state resistance device, diodes, or any other device provided with a resistive device that converts electric, thermal energy into optical energy, connected in series with the output terminal of the charging source V2 having the lower voltage and connected in series with the resistance device Z0 or in parallel with the resistance device Z0 before being outputted to the load to execute differential current limit with a load side; and the number of the resistance device Z1 is increased depending on that of the step of the voltage of the multi-step charging source to be connected in series with the output terminal of the voltage source of a selected step; and the voltage limiting resistance device is provided or not as required by the circuit;
- Set voltage detection and drive circuit VD&D100: comprised of a mechanic-electronic or a solid-state electronic device, is provided as an option to be connected in parallel with both terminals of a DC charging source or a (dis) chargeable storage discharging device ESD100; the Set voltage detection and drive circuit VD&D100 is not functioning when the (dis)chargeable storage discharging device ESD100 being at its LV status at initial charging; later the charging source V2 with higher voltage takes over when the terminal voltage of the (dis)chargeable storage discharging device ESD100 is higher than that of the charging source V1 with the lower voltage, and the value of the divided current in increased by driving the set voltage detection and drive device VD&D100 when the charging voltage from the (dis)chargeable storage discharging device ESD100 rises up to approach the preset voltage thus to increase the current flowing through the resistance device Z1(or the resistance device Z0 connected in series with it) connected in series with the charging source V2 with higher voltage, and further to increase the drop at the resistance device Z1 (or the resistance device Z0 connected in series with it) for reducing the voltage to the (dis)chargeable storage discharging device ESD100; so that the charging current is changed to drive the primary control switch SW1 connected in series with the charging circuit to cut off the charging current to the (dis)chargeable storage discharging device ESD100 when its terminal voltage reaches the preset voltage; the circuit and device selected for the primary control switch SW1 include:
   (1) The set voltage detection and drive circuit VD&D100 is provided to drive a dedicated pilot drive power control device CD 100 comprised of a solid-state circuit device or a mechanic-electronic device to drive a primary control switch SW1 comprised of a solid-state switching device Q100 which is comprised of transistor and a gate voltage device SCR; or
   (2) The set voltage detection and drive circuit VD&D100 is provided to drive a dedicated pilot drive power control device CD 100 comprised of a drive coil W100 from a mechanic-electronic switching device MS 100 to control a primary control switch SW1 comprised of the solid-state switching device MS 100; or
   (3) The set voltage detection and drive circuit VD&D100 is provided to drive and heat up a dedicated pilot drive power control device CD 100 comprised of electric heating device AH100, and further to drive the primary control switch SW1 comprised of the constantly closed thermal temperature switch THS 100;
- a limiting resistance Z100: an optional mechanic-electronic or solid-state electronic resistance device, diode or any other device provided with a resistance device that converts electric energy or thermal energy into optical energy; when a subsequent small current make-up charging is required to be executed by the (dis)chargeable storage discharging device, the limit resistance Z100 is connected in parallel with both terminals of the primary current contact of the primary control switch SW1 so that when the primary control switch SW1 is interrupted, the DC charging source continues to execute small current charging to the (dis)chargeable storage discharging device through the limit resistance Z100;
- a spark arresting device SP100: an optional device comprised of resistance capacitor or semi-conductor spark arresting device to be directly connected in parallel with both terminals of the contact of the constantly closed thermal temperature switch THS 100 depending on the polarity of the source, or a limit resistance Z100 is connected in series before the parallel connection so to arrest spark for inhibiting EMI noise when the constantly closed thermal temperature switch THS 100 contact turns from constantly closed to constantly opened;
- a conduction contact (or a plug-socket unit) P0: an optional device of conduction contact or plug-socket unit comprised of a mechanic-electronic structure with one terminal connected to a charging source and its related circuit on the source side, the other terminal relatively coupled connects the (dis)chargeable storage discharging device BSD100 and its related circuit on the load side;
- an isolating diode CR100: related to an optional device comprised of one or more than one diode to be connected in series or series-parallel between the charging source and the (dis)chargeable storage discharging device; or when required, one or more than one diode is connected in series or series-parallel to regulate the output voltage of the DC source by means of positive drop;
- an inverse voltage prevention diode CR200: an optional device to be positive-sequence connected in series with the output terminal of the charging source V1 with the lower voltage or any other voltage with lower step to prevent inverse voltage; or alternatively, one or more than one diodes to prevent inverse voltage are connected in series or series-parallel by taking advantage of their positive-sequence drop in regulating the output voltage of the DC source;
- a secondary resistance Z200: related to a resistive or inductive resistance device, or a mix of both, or any load from other resistance device with resistivity, provided as an optional device to be connected in parallel with both terminals of the pilot drive power controlled device CD 100 to execute dividing the current; the secondary resistance Z200 in the circuit is provided to be connected in parallel with both terminals of the dedicated pilot drive power controlled device CD 100 to regulate division ratio so to gradually reduce the charging current to the (dis)chargeable storage discharging device on the load side, laving the dedicated pilot drive power controlled device CD100 to control the operation of an analog or switching type transistor, MOSFET, IGBT, PUB or gate voltage device SCR, or other solid-state analog or switching device Q100; Fig. 5 is a schematic view showing a circuit of the present invention comprised of a gate voltage device SCR as the primary control switch and its matching related circuit devices, and Fig. 6 is a schematic view showing a circuit of the present invention comprised of a gate voltage device SCR as the primary control switch and additional relay transistors.

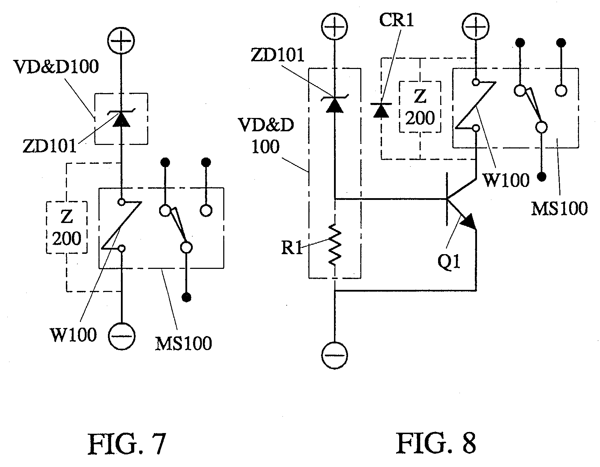

Fig. 7 is a schematic view showing a circuit of the present invention comprised of a mechanic-electronic switch as the primary control switch and its matching related circuit devices. Within, a differential zener diode ZD101 is connected in series with the drive coil W100 of the mechanic-electronic switch and the secondary resistance Z200 is provided to be connected in parallel with both terminals of the drive coil W100.

Fig. 8 is a schematic view showing a circuit of the present invention comprised of a mechanic-electronic switch as the primary control switch and an additional relay transistor. Within, the differential zener diode ZD101 is connected in series with a differential resistance R1 to drive the relay transistor Q1. The secondary resistance Z200 is connected in parallel with both terminals of the drive coil W100, the drive coil W100 is connected in parallel with a flywheel diode CR1 as required before being connected in series with the relay transistor Q1, to regulate the division ratio for gradually reducing the charging current to the load side (dis)chargeable storage discharging device while the operation of the mechanic-electronic switching device MS 100 to be controlled by the drive coil W100.

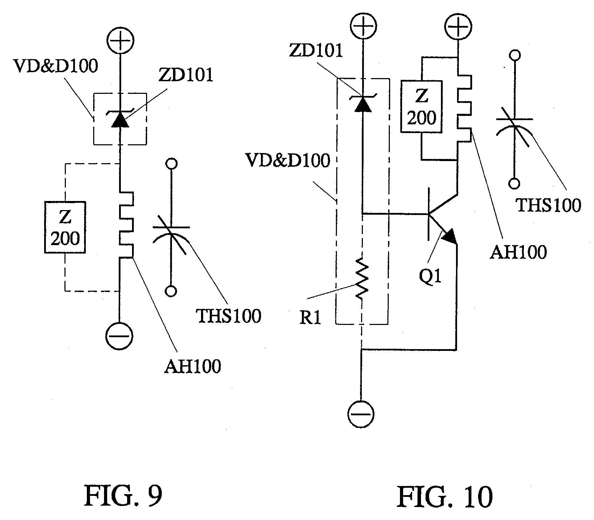

Fig. 9 is a schematic view showing a circuit of the present invention comprised of a constantly closed thermal temperature switch as the primary control switch and its matching related circuit devices. Within, the secondary resistance Z200 is connected in parallel with both terminals of a heating device AH100 controlled by a dedicated pilot drive power controlled device CD 100.

Fig. 10 is a schematic view showing a circuit of the present invention comprised of a constantly closed thermal temperature switch as the primary control switch and an additional relay transistor. Within, the secondary resistance Z200 is connected in parallel with both terminals of the heating device AH100 driven by the relay transistor Q1 to regulate the division ratio for gradually reducing the charging current to the load side (dis)chargeable storage discharging device. The operation of the relay transistor Q1 connected in series with the heating device AH100 is controlled by the dedicated pilot drive power controlled device CD100, and the operation of the constantly closed thermal temperature switch THS100 is controlled by the heating device AH 100.

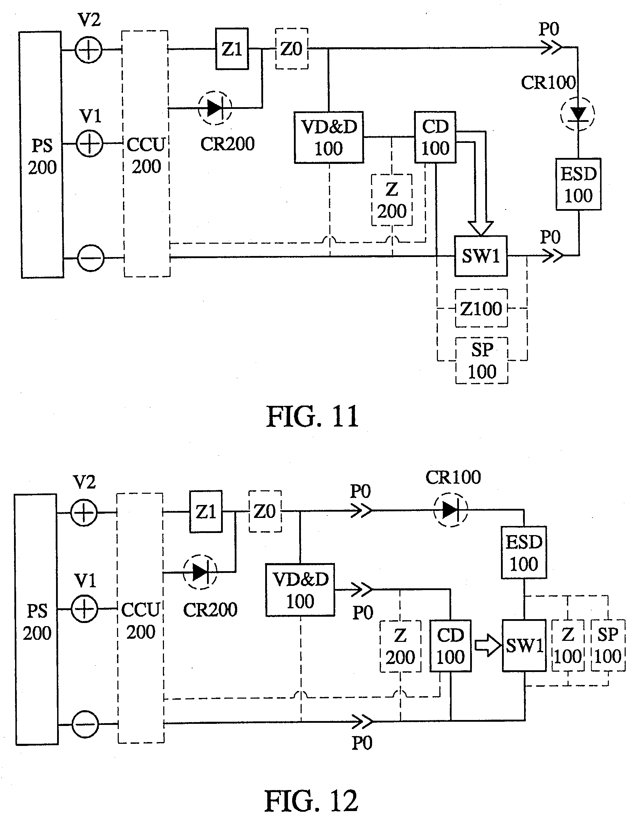

As required, a segregation is provided for the charging device of the multi-step voltage charging source of the present invention by providing a conduction contact (or a plug-socket unit) P0 adapted to the location where its primary control switch is provided, and the locations to provide the set voltage detection and drive circuit VD&D100 and the pilot drive power controlled device CD 100 circuit to further configure those preferred embodiments illustrated in Figs. 11 through Fig. 16; within

Fig. 11 shows a second block chart of a circuit of a charging device of a multi-step voltage charging source of the present invention comprised of:
- a multi-step voltage charging source PS200: related to a multi-voltage DC source of two or more than two steps, or a DC source of multi-step voltage directly rectified by AC source, or a multi-step voltage DC source comprised of a secondary AC output terminal after transformation by a transformer then rectified; including at least two units of charging source of different voltages V1 with the lower voltage and V2 with higher voltage, or more than two multi-step voltage charging source of different voltages, and the multi-step charging sources of different voltages can be comprised of charging sources of the same or different current capacity connected in series of positive sequence polarity or sharing the common negative electrode or the common positive electrode for outputting to a load comprised of related charging control circuit through conduction connector and the (dis)chargeable discharging device BSD100;
- a central control unit CCU200: comprised of a drive circuit containing a mechanic-electronic switch or a solid-state power switch device to control conversion of DC output voltage and On-Off or timed cutoff, wherein, the central control unit CCU200 controls the operation of converting multi-step voltage DC source from the multi-step voltage charging source PS200 into a required multi-step voltage DC output voltage by its internal mechanic-electronic switch or solid-state power switch ; or controls the operation of a primary control switch SW1 comprised of a solid analog or switching device or a mechanic-electronic switching device or a constantly closed thermal temperature switch by controlling the drive circuit to execute On-Off operation or timed cutoff, thus further to control the On-Off operation of the charging DC source and the output of timed cutoff; the drive circuit being optional and is selected for all or partial functions;
- an inverse voltage prevention diode CR200: an optional device to be positive-sequence connected in series with the output terminal of the charging source V1 with the lower voltage or any other voltage with lower step to prevent inverse voltage; or alternatively, one or more than one diodes to prevent inverse voltage are connected in series or series-parallel by taking advantage of their positive-sequence drop in regulating the output voltage of the DC source;
- a resistance device Z1: related to a resistive device comprised of a mechanic-electric resistance device or a solid-state resistance device, diodes, or any other device provided with a resistive device that converts electric, thermal energy into optical energy, connected in series with the output terminal of the charging source V2 having the lower voltage and connected in series with the resistance device Z0 or in parallel with the resistance device Z0 before being outputted to the load to execute differential current limit with a load side; and the number of the resistance device Z1 is increased depending on that of the step of the voltage of the multi-step charging source to be connected in series with the output terminal of the voltage source of a selected step; and the voltage limiting resistance device is provided or not as required by the circuit;
- a resistance device Z0: related to a resistive device comprised of a mechanic-electric resistance device or a solid-state resistance device, a diode, or other resistive device that converts electric or thermal energy into optical, connected in series with the output terminal of the charging source V1 having the lower voltage to execute differential current limit with a load side;

And the voltage limiting resistance device is provided or not as required by the circuit; and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0. Wherein, the primary control switch SW1 is provided on the charging source side to control the operation of the charging source side, and further control the charging to the (dis)chargeable storage discharging device ESD100 by means of the conduction contact (or plug-socket unit) P0. The set voltage detection and drive circuit VD&D100 is connected in parallel on the charging source side to control the operation of the pilot drive power controlled CD100, and further to control the operation of the primary control switch SW1 (comprised of the solid-state analog or switching device Q100 or the mechanic-electronic switching device MS100, or the constantly closed thermal temperature switch THS100) provided on the source side.

Fig. 12 is a third block chart of a circuit of the charging device of the charging source with multi-step voltage charging source of the present invention. The circuit is comprised of the multi-step voltage charging source PS200, the central control unit CCU200, the inverse voltage prevention diode CR200, the resistance device Z1 and the resistance Z0 same as illustrated in Fig. 11, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0. Wherein, the primary control switch SW1 is provided to control the operation of the load side. The set voltage detection and drive circuit VD&D100 connected in parallel on the charging source side controls the operation of the pilot drive power controlled CD100 through the conduction contact (or plug-socket unit) P0, and further controls the operation of the primary control switch SW1 (comprised of the solid-state analog or switching device Q100 or the mechanic-electronic switching device MS 100, or the constantly closed thermal temperature switch THS100) provided on the load side to control the operation of the charging to the (dis)chargeable storage discharging device ESD100.

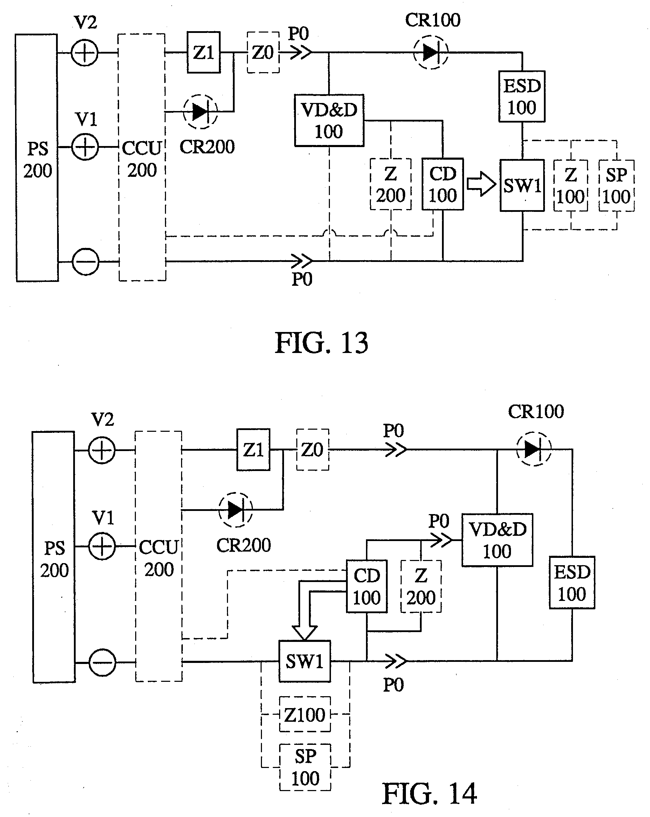

Fig. 13 is a fourth block chart of a circuit of the charging device of the charging source with multi-step voltage charging source of the present invention. The circuit is comprised of the multi-step voltage charging source PS200, the central control unit CCU200, the inverse voltage prevention diode CR200, the resistance device Z1 and the resistance Z0 same as illustrated in Fig. 11, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0. Wherein, the primary control switch SW1 is provided on the load to control the operation of the load side. The set voltage detection and drive circuit VD&D100 and the pilot drive power controlled device CD100 connected to it are provided on the load side to control the operation of the primary control switch SW1 (comprised of the solid-state analog or switching device Q100 or the mechanic-electronic switching device MS 100, or the constantly closed thermal temperature switch THS100) on the load side through the conduction contact (or plug-socket unit) P0, and further to control the operation of the charging to the (dis)chargeable storage discharging device ESD100.

Fig. 14 is a fifth block chart of a circuit of the charging device of the charging source with multi-step voltage charging source of the present invention. The circuit is comprised of the multi-step voltage charging source PS200, the central control unit CCU200, the inverse voltage prevention diode CR200, the resistance device Z1 and the resistance Z0 same as illustrated in Fig. 11, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0. Wherein, the primary control switch SW1 is provided on the load side to control the operation of the charging source side. The set voltage detection and drive circuit VD&D100 and the pilot drive power controlled CD100 connected to it are provided on the load side to control the operation of the primary control switch SW1 (comprised of the solid-state analog or switching device Q100 or the mechanic-electronic switching device MS 100, or the constantly closed thermal temperature switch THS100) provided on the source side through the conduction contact (or plug-socket unit) P0, and further controls to control the operation of the charging to the (dis)chargeable storage discharging device ESD100.

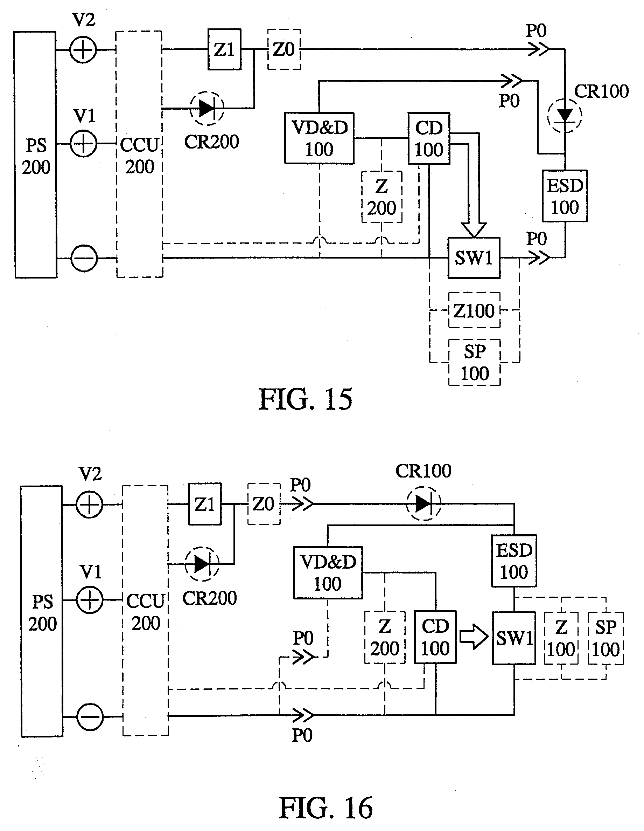

Fig. 15 is a sixth block chart of a circuit of the charging device of the charging source with multi-step voltage charging source of the present invention. The circuit is comprised of the multi-step voltage charging source PS200, the central control unit CCU200, the inverse voltage prevention diode CR200, the resistance device Z1 and the resistance Z0 same as illustrated in Fig. 11, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0. Wherein, the set voltage detection and drive circuit VD&D100 and the pilot drive power controlled CD100 have one terminal connected to the DC charging source side and the other terminal to the load side. The set voltage detection and drive circuit VD&D100 controls the operation of the pilot drive power controlled device CD100 connected to it, the operation of the primary control SW1 provided on the source side, and further the operation of the primary control switch SW1 (comprised of the solid-state analog or switching device Q100 or the mechanic-electronic switching device MS 100, or the constantly closed thermal temperature switch THS100)provided on the load side thus to control the operation of the charging to the (dis)chargeable storage discharging device BSD100 through the conduction contact (or plug-socket unit) P0.

Fig. 16 is a seventh block chart of a circuit of the charging device of the charging source with multi-step voltage charging source of the present invention. The circuit is comprised of the multi-step voltage charging source PS200, the central control unit CCU200, the inverse voltage prevention diode CR200, the resistance device Z1 and the resistance Z0 same as illustrated in Fig. 11, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0. Wherein, the set voltage detection and drive circuit VD&D100 and pilot drive power controlled CD100 connected to it have one terminal connected to the DC charging source side and the other terminal to the load side, the set voltage detection and drive circuit VD& D100 controls the operation of the pilot drive power control device CD 100, thus the operation of the primary control switch SW1 (comprised of the solid-state analog or switching device Q 100 or the mechanic-electronic switching device MS 100, or the constantly closed thermal temperature switch THS 100) provided on the load side to control the operation of the charging to the (dis)chargeable storage discharging device ESD100.

The optional set voltage detection & drive circuit VD&D100 as disclosed in those preferred embodiments of the present invention is located at where:
- the set voltage detection & drive circuit VD&D100 is connected in parallel on the load side and incorporated with the (dis)chargeable storage discharging device ESD 100; or
- the set voltage detection & drive circuit VD&D100 is connected in parallel on the load side and separated from the (dis)chargeable storage discharging device ESD100.

The optional set voltage detection & drive circuit VD&D100 and the circuit of the pilot drive power controlled device CD 100 is located at where:
- both of the set voltage detection & drive circuit VD&D100 and the circuit of the pilot drive power controlled device CD 100 are connected to each other then further connected in parallel on the load side, and the set voltage detection & drive circuit controls the operation of the pilot drive power controlled device CD100 connected to it; or
- both of the set voltage detection & drive circuit VD&D100 and the circuit of the pilot drive power controlled device CD 100 are connected to each other or in parallel on the load side, and the set voltage detection & drive circuit controls the operation of the pilot drive power controlled device CD 100 connected to it.

As for the optional device of the constantly closed thermal temperature switch THS100 functioning as the primary control switch SW1, the constantly closed thermal temperature switch THS 100 and its contact is located at where:
- the constantly closed contact of the constantly closed thermal temperature switch THS100 is connected in series on the load side of the output so to be directly connected in series with the (dis)chargeable storage discharging device ESD100. The constantly thermal temperature switch THS100 indicates a good thermocouple structure with the (dis)chargeable storage discharging device ESD100 to protect the latter during its charging control and operation and over-current (dis) charging; or
- the constantly closed contact of the constantly closed thermal temperature switch THS100 is connected in series on the load side of the output so to be directly connected in series with the (dis)chargeable storage discharging device ESD100. The constantly thermal temperature switch THS100 is separated from the (dis)chargeable storage discharging device ESD100 to protect the latter during its charging control and operation and over-current charging; or
- the constantly closed contact of the constantly closed thermal temperature switch THS100 is connected in series on the source side so to be connected in series with charging source. The constantly thermal temperature switch THS100 indicates a good thermocouple structure with the (dis)chargeable storage discharging device ESD100 to protect the latter during its charging control and operation by the (dis)chargeable storage discharging device and over-current charging; or
- the constantly closed contact of the constantly closed thermal temperature switch THS100 is connected in series on the source side so to be connected in series with charging source. The constantly thermal temperature switch THS100 is separated from the (dis)chargeable storage discharging device ESD100 to protect the latter during its charging control and operation by the (dis)chargeable storage discharging device and over-current charging.

The optional limiting resistance Z100 is provided at where:
- If make-up charging is not required after the charging current is cut by the primary control switch SW1, the limiting resistance Z100 is not required; or
- If small current make-up charging is required after the charging current is cut by the primary control switch SW1, the limiting resistance Z100 is connected in parallel with both terminals of the contact for control and operation of the primary control switch SW1 so that when the primary control switch SW1 is turned to open circuit, the limiting resistance Z100 executes small current make-up charging to the (dis)chargeable storage discharging device ESD100, or
- the limiting resistance Z100 is provided in a structure separated from the primary control switch SW1; or
- the limiting resistance Z100 indicates an open common structure with the primary control switch SW1 comprised of the constantly closed thermal switch THS100 so to keep the primary control switch SW1 being constantly heated to maintain the closed status by means of the thermal energy generated from electric heating; or
- the limiting resistance Z100 indicates a sealed common structure of good thermocouple with the primary control switch SW1 comprised of the constantly closed thermal switch THS100 so to keep the primary control switch SW1 being constantly heated to maintain the closed status.

The primary control and set voltage detection & drive circuit of the charging device with multi-step charging source of the present invention is further replaced by a divided circuit device with a selectable conduction voltage connected in parallel with an output terminal so that when the output terminal or the (dis)chargeable storage discharging device ESD100 being charged arrives at the selected voltage, divided current and voltage are created by the divided circuit device with a selectable conduction voltage.

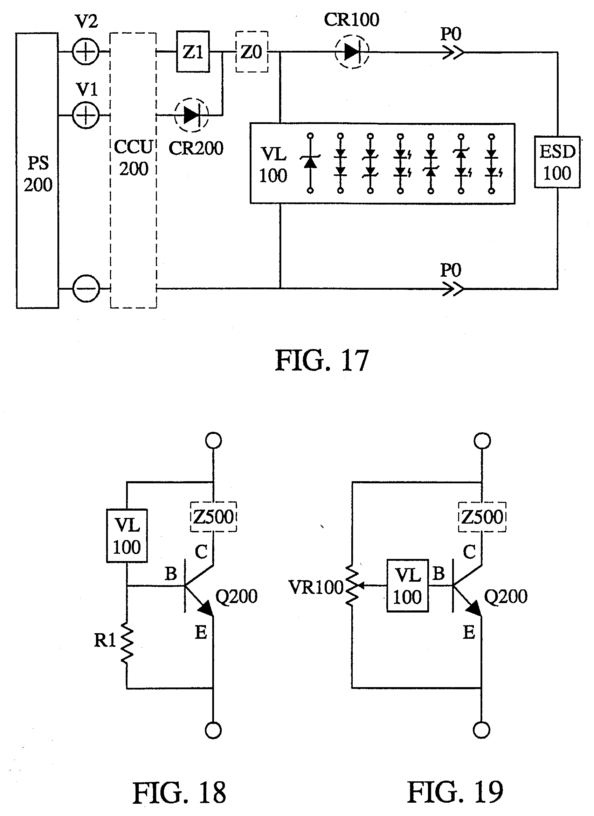

Fig. 17 is a schematic view showing a preferred embodiment of the present invention by having its output terminal connected in parallel with divided current device with selectable conduction voltage essentially comprised of:
- a multi-step voltage charging source PS200: related to a multi-voltage DC source of two or more than two steps, or a DC source of multi-step voltage directly rectified by AC source, or a multi-step voltage DC source comprised of a secondary AC output terminal after transformation by a transformer then rectified; including at least two units of charging source of different voltages V1 with the lower voltage and V2 with higher voltage, or more than two multi-step voltage charging source of different voltages, and the multi-step charging sources of different voltages can be comprised of charging sources of the same or different current capacity connected in series of positive sequence polarity or sharing the common negative electrode or the common positive electrode for outputting to a load comprised of related charging control circuit through conduction connector and the (dis)chargeable discharging device ESD100;
- a central control unit CCU200: comprised of a drive circuit containing a mechanic-electronic switch or a solid-state power switch device to control conversion of DC output voltage and On-Off or timed cutoff, wherein, the central control unit CCU200 controls the operation of converting multi-step voltage DC source from the multi-step voltage charging source PS200 into a required multi-step voltage DC output voltage by its internal mechanic-electronic switch or solid-state power switch ; or controls the operation of a primary control switch SW1 comprised of a solid analog or switching device or a mechanic-electronic switching device or a constantly closed thermal temperature switch by controlling the drive circuit to execute On-Off operation or timed cutoff, thus further to control the On-Off operation of the charging DC source and the output of timed cutoff; the drive circuit being optional and is selected for all or partial functions;
- a (dis)chargeable discharging storage device ESD100: comprised of a Ni-Cd, Ni-H, Ni-Zn, Ni-Fe or Lithium, or lead storage battery, or any other (dis)chargeable secondary battery functioning as a charging source or a load to be charged;
- a resistance device Z0: related to a resistive device comprised of a mechanic - electric resistance device or a solid-state resistance device connected to the output terminal of the source to execute differential limiting function with the load side, and can be provided or not as required by the circuit;
- a resistance device Z1: related to a resistive device comprised of a mechanic - electric resistance device or a solid-state resistance device, diodes, or any other device provided with a resistive device that converts electric, thermal energy into optical energy, connected in series with the output terminal of the charging source V2 having the lower voltage and connected in series with the resistance device Z0 or in parallel with the resistance device Z0 before being outputted to the load to execute differential current limit with a load side; and the number of the resistance device Z1 is increased depending on that of the step of the voltage of the multi-step charging source to be connected in series with the output terminal of the voltage source of a selected step; and the voltage limiting resistance device is provided or not as required by the circuit;
- a conduction contact (or a plug-socket unit) P0: an optional device of conduction contact or plug-socket unit comprised of a mechanic-electronic structure with one terminal connected to a charging source and its related circuit on the source side, the other terminal relatively coupled connects the (dis)chargeable storage discharging device ESD 100 and its related circuit on the load side;
- an isolating diode CR100: related to an optional device comprised of one or more than one diode to be connected in series or series-parallel between the charging source and the (dis)chargeable storage discharging device; or when required, one or more than one diode is connected in series or series-parallel to regulate the output voltage of the DC source by means of positive drop;
- an inverse voltage prevention diode CR200: an optional device to be positive-sequence connected in series with the output terminal of the charging source V1 with the lower voltage or any other voltage with lower step to prevent inverse voltage; or alternatively, one or more than one diodes to prevent inverse voltage are connected in series or series-parallel by taking advantage of their positive-sequence drop in regulating the output voltage of the DC source; and
- a divided circuit device with selectable conduction voltage VL100: related to a divided circuit device provided with selectable conduction voltage and dividing current functions having (1) a zener voltage from a zener diode as the conduction voltage, or (2) a positive-sequence drop voltage from a diode as the conduction voltage, or (3) an reverse-sequence use of a drop voltage from a diode, or (4) a positive-sequence drop voltage from a light emission diode as the conduction voltage, or (5) one or more than one combination among (1) through (4).

In case of larger divided current is required in the circuit described above, a power transistor is incorporated to the divided circuit device with selectable voltage of the present invention as shown in a first preferred embodiment illustrated in Fig. 18. Within, the divided circuit device with selectable conduction voltage is connected in series between a collection electrode C and a base electrode of the power transistor Q200, and as required a differential resistance R1 is connected in parallel between the base electrode C and an emission electrode E so that when the voltage between the collection electrode C and the emission electrode E of the power transistor Q200 is greater than the voltage set by the divided circuit device VL100 with selectable conduction voltage and the working voltage of the power transistor Q200 itself, the power transistor Q200 is able to execute relative conduction. In addition to being directly connected in parallel with one terminal of the divided circuit device VL100 with selectable conduction voltage, the collection electrode C of the power transistor Q200 is connected in series with a resistance device Z500 before being connected in parallel with one terminal of the divided circuit device VL100 with selectable conduction voltage.

Or as illustrated in Fig. 19 for a second preferred embodiment of the present invention comprised of a circuit incorporating a divided circuit device with selectable voltage to a power transistor. Within, a variable resistance VR100 is connected in parallel between the collection electrode C and the emission electrode E of the power transistor Q200 while an adjustable pin from the variable resistance is further connected to the base electrode B of the power transistor Q200 through the divided circuit device VL100 with selectable conduction voltage for the power transistor Q200 to execute relative conduction when the voltage between the collection electrode C and the emission electrode E of the power transistor Q200 arrives at the preset value according to the regulation by the variable resistance VR100; in addition to being directly connected to one fixed pin from the variable resistance VR100, the collection electrode C of the power transistor Q200 as required is first connected in series with a resistance device Z500 before being connected to one fixed pin from the variable resistance VR100.

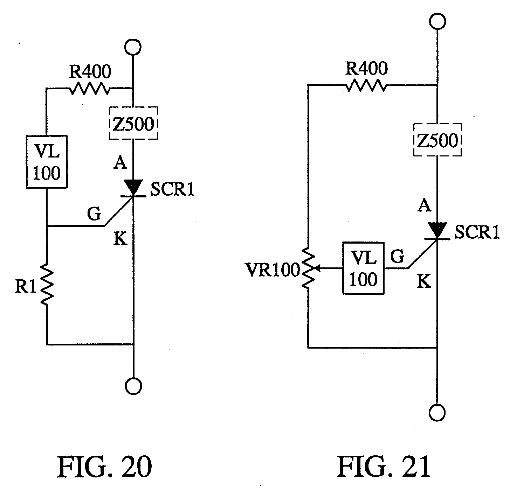

Fig. 20 is a view showing an example of a circuit of the present invention comprised of the divided current device with selectable conduction voltage incorporated with a gate voltage device. Within, alternatively, the divided circuit device VL100 with selectable conduction voltage is further connected in series with a limiting resistance R400 before being further connected in series between a positive electrode A and a gate electrode G of the gate voltage device SCR1; as required a differential resistance R1 is connected in parallel between the gate electrode G and a negative electrode K so that when the voltage between the positive electrode A and the gate electrode G of the gate voltage device SCR1 is greater than the preset voltage of the divided circuit device V1100 with a selectable conduction voltage and the working voltage of the gate voltage device SCR1, the gate voltage device SCR1 is triggered off and conducted; in addition to being directly connected in parallel with one terminal of the divided circuit device VL100 with selectable conduction voltage, the positive electrode A of the gate voltage device SCR1 is as required connected in series with a resistance Z500 before being connected in parallel with a terminal of the divided circuit device VL100 with selectable conduction voltage.

Fig. 21 is a view showing another example of a circuit of the present invention comprised of the divided current device with selectable conduction voltage incorporated with a gate voltage device. Within, alternatively, the divided circuit device VL100 with selectable conduction voltage is further connected in series with a limiting resistance R400 before being further connected in series between a positive electrode A and a negative electrode K of the gate voltage device SCR1; and an adjustable pin from the variable resistance VR100 is conducted to the Gate G of the gate voltage device SCR1 through the divided circuit device VL100 with selectable conduction voltage, so that when the voltage between the gate electrode G and the negative electrode K arrives at the preset value, the gate voltage device SCR1 is triggered off and conducted as regulated by the variable resistance VR100, voltage device SCR1 is greater than the preset voltage of the divided circuit device V1100 with a selectable conduction voltage and the working voltage of the gate voltage device SCR1, the gate voltage device SCR1 triggers off the conduction; in addition to being directly connected to a fixed pin of the variable resistance VR100 (or a pin of the limiting resistance R400), the positive electrode A of the gate voltage device SCR1 is as required first connected in series with a resistance device Z500 before being connected to a fixed pin of the variable resistance VR100(or a pin of the limiting resistance R400).

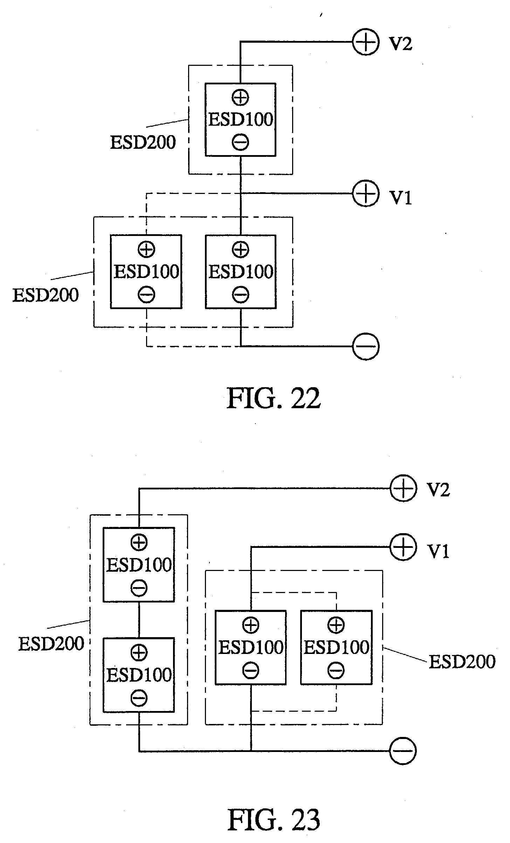

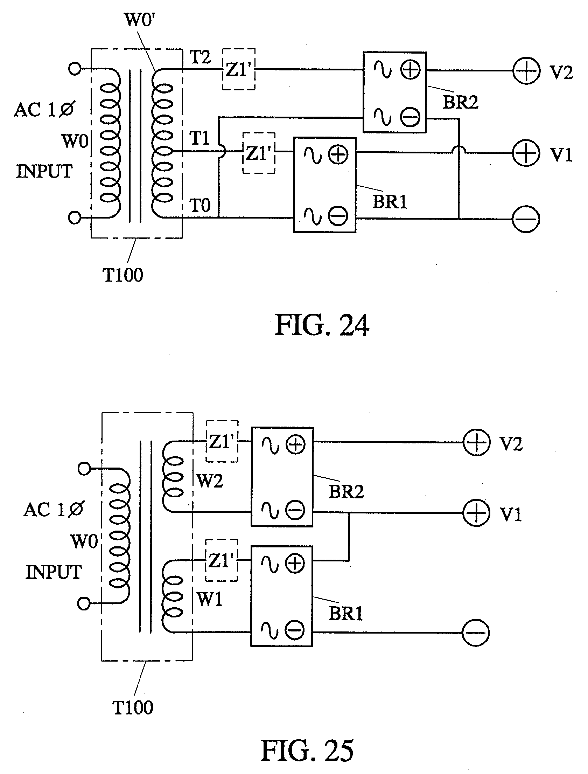

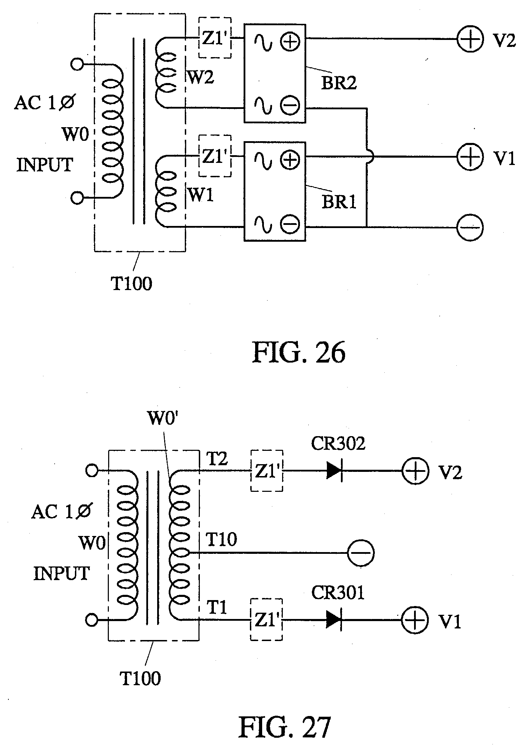

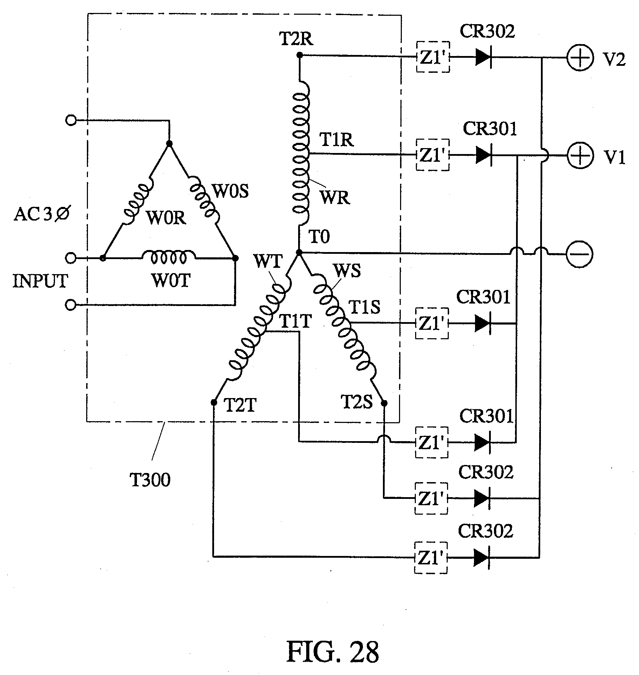

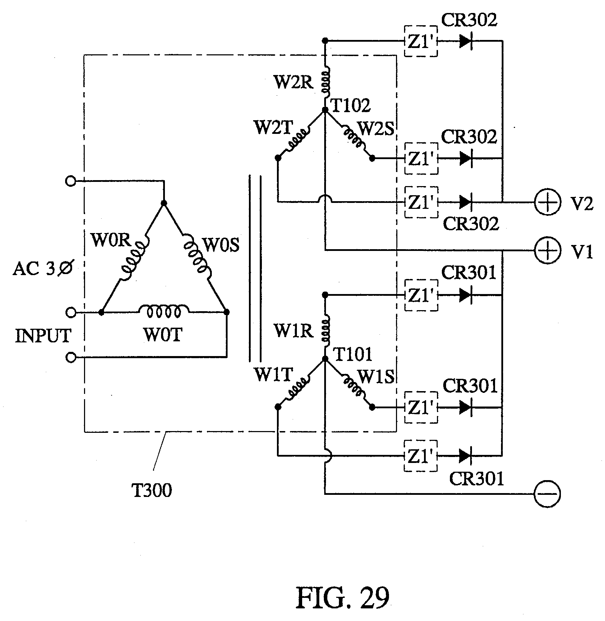

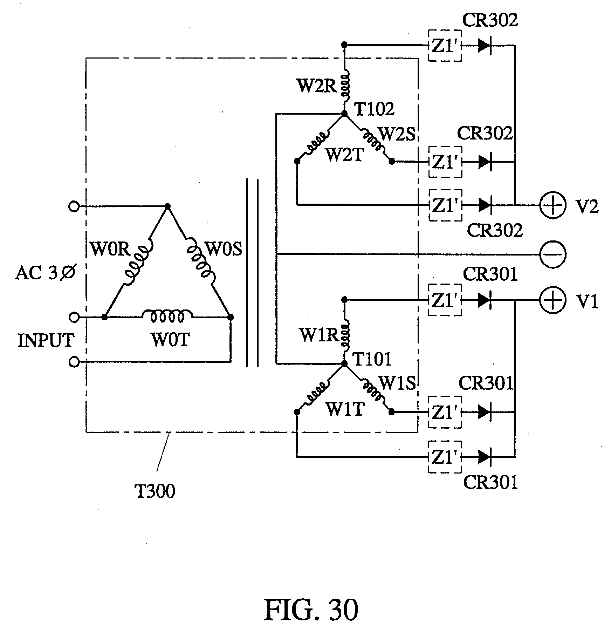

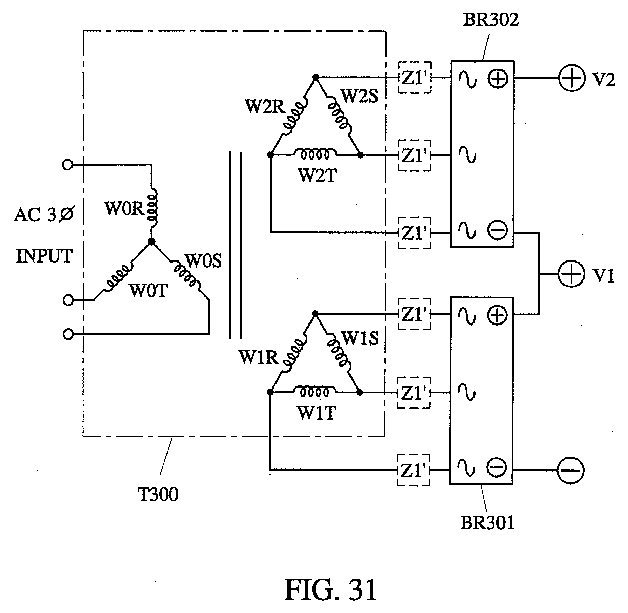

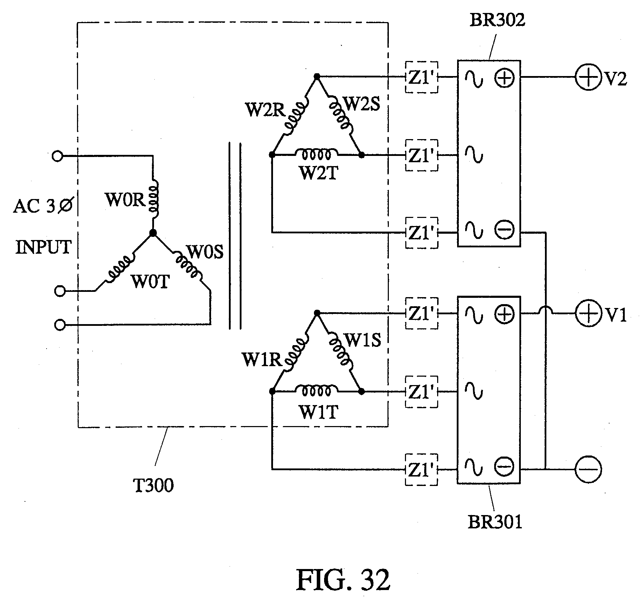

The multi-step voltage charging source PS200 with two or more than two steps is comprised of:
(1) Two or more than two units of (dis)chargeable storage discharging device ESD200 of same or different capacity, or same or different voltage that are connected in positive sequence series into a multi-step voltage DC sources having two or more than two outputs with different voltages as illustrated in Fig. 22; within, the one or more than one unit of (dis)chargeable storage discharging device ESD200 is comprised of one or more than one (dis)chargeable storage discharging device ESD100 connected in series or parallel. Fig. 22 shows a schematic view of a multi-step voltage with two or more than two steps of the present invention comprised of two or more than two (dis)chargeable storage discharging devices connected in series.
(2) Two or more than two units of (dis)chargeable storage discharging device ESD200 of same or different capacity, or same or different voltage that are connected by their common negative electrode (or common of positive electrode) into a multi-step voltage DC sources having two or more than two outputs with different voltages as illustrated in Fig. 23 ; within, the one or more than one unit of (dis)chargeable storage discharging device ESD200 is comprised of one or more than one (dis)chargeable storage discharging device ESD100 connected in series or parallel. Fig. 23 shows a schematic view of a multi-step voltage with two or more than two steps of the present invention comprised of two or more than two (dis)chargeable storage discharging devices connected by their common negative electrode.
(3) A single-phase transformer T100 with output winding as illustrated in Fig. 24 contains an input winding W0 and an output winding W0' having two or more than two output connectors T0, T1 and T2 of different rated voltage and the same or different rated current. The output winding W0' shares the output connector T0 of common terminal, the output connector T1 with lower voltage and the output connector T2 with higher voltage T2. Within, as required the output connector T2 with higher voltage is alternatively connected in series with a resistance device Z1' before jointing the output connector T0 to be conducted to a bridge type rectifier BR2 while the output connector T1 with higher voltage is alternatively connected in series with a resistance device Z1' before jointing the output connector T0 to be conducted to a bridge type rectifier BR1. The negative electrode output terminal at an DC output terminal of both of the bridge type rectifier BR1 and the bridge type rectifier BR2 is jointly connected so that a positive electrode output terminal of the bridge type rectifier BR2 forms an output terminal of a charging source V2 with higher voltage of the multi-step voltage charging source PS200, and a positive electrode output terminal of the bridge type rectifier BR1 forms an output terminal of a charging source V1 with lower voltage of the multi-step voltage charging source PS200. Positive electrode output terminals of both bridge type rectifiers BR1 and BR2 are jointly connected while negative electrode output terminals of both bridge type rectifiers BR1 and BR2 indicate various voltage outputs. The voltage step of the multi-step voltage charging source PS200 is of two or more than two steps and the number of the adapted bridge type rectifier shall be increased accordingly. Fig. 24 shows a first preferred embodiment of a multi-step voltage charging source of the present invention having a single-phase transformer.
(4) A single-phase transformer T100 with output winding as illustrated in Fig. 25 contains an input winding W0 and two or more than two output windings W1 and W2 of the same or different rated voltage and the same or different rated current. As required, each unit of output winding is respectively connected in series with a resistance device Z1' and the output winding W1 is outputted to a bridge type rectifier BR1 while the other W2 to a bridge type rectifier BR2. A DC output terminal from the bridge type rectifier BR1 indicates positive sequence series with a DC output terminal from the bridge type rectifier BR2 having the negative electrode output terminal from the bridge type rectifier BR1 as the common negative electrode. The positive electrode output terminal of a charging source V1 with the lower voltage is comprised of incorporated positive-sequence series by two units of the bridge type rectifiers BR1 and BR2 while the positive electrode output terminal of a charging source V2 with the higher voltage is comprised of the positive electrode output terminal from another unit of bridge type rectifier BR2. The voltage step of the multi-step voltage charging source PS200 is of two or more than two steps and the number of the adapted bridge type rectifier shall be increased accordingly. Fig. 25 shows a second preferred embodiment of a multi-step voltage charging source of the present invention having a single-phase transformer.
(5) A single-phase transformer T100 with output winding as illustrated in Fig. 26 contains an input winding W0 and two or more than two output windings W1 and W2 of the same or different rated voltage and the same or different rated current. As required, each unit of output winding is respectively connected in series with a resistance device Z1' and the output winding W1 is outputted to a bridge type rectifier BR1 while the other W2 to a bridge type rectifier BR2. A DC output negative terminal from the bridge type rectifier B1 and that from the bridge type rectifier BR2 indicate a common connection and function as a common negative electrode. A positive electrode output terminal of a charging source V1 with lower voltage is comprised of the positive electrode output terminal from the bridge type rectifier BR1 while a positive electrode output terminal of a charging source V2 with higher voltage is comprised of the positive electrode output terminal from the bridge type rectifier BR2. Or alternatively, the positive electrode output terminals from both bridge type rectifiers BR1 and BR2 are jointly connected while outputs of various voltages are comprised of the negative electrode output terminals from both bridge type rectifiers BR1 and BR2. The voltage step of the multi-step voltage charging source PS200 is of two or more than two steps and the number of the adapted bridge type rectifier shall be increased accordingly. Fig. 26 shows a third preferred embodiment of a multi-step voltage charging source of the present invention having a single-phase transformer.
(6) A single-phase transformer T100 with output winding as illustrated in Fig. 27 contains an input winding W0 and an output winding W0' containing two or more than two units of transformer of different rated voltage, the same or different rated current and an intermediate output connector T10, an output connector T1 of lower voltage and an output connector T2 of higher voltage. As required, the output terminals of the output connector T1 of lower voltage and the output connector T2 of higher voltage is respectively connected in series with a resistance device Z1'. The output connector T2 of higher voltage is positive-sequence connected in series with a rectifying diode CR302 with the positive electrode output terminal from the rectifying diode CR302 to form the output positive terminal of a charging source V2 with higher voltage of the multi-step voltage charging source PS200. The output connector T1 of lower voltage is positive-sequence connected in series with a rectifying diode CR301 with a positive electrode output terminal from the rectifying diode CR301 to form an output positive terminal of the charging source V1 with lower voltage of the multi-step voltage charging source PS200. The intermediate output connector T10 forms a common negative electrode. In the circuit described above, both of the rectifying diodes CR301 and CR302 is provided in reverse direction for the negative electrode output terminals of both rectifying diodes CR301 and CR302 to form various voltage outputs with the intermediate output connector T10 functioning as the common positive electrode. The voltage step of the multi-step voltage charging source PS200 is of two or more than two steps and the number of the adapted rectifying diode shall be increased accordingly. Fig. 27 shows a fourth preferred embodiment of a multi-step voltage charging source of the present invention having a single-phase transformer.
(7) As illustrated in Fig. 28, a 3-phase transformer T300 contains 3-phase input windings WOR, WOS and WOT, and two or more than two units of 3-phase output windings WR, WS and WT of different rated voltage and same or different rated current. The windings of each phase contain output connectors T2R, T2S and T2T of higher voltage and output connectors T1R, T1S and T1T of lower voltage. Windings of each phase are connected to one another by a common connector T10. Within, the output connectors of lower voltage and the output connectors of higher voltage from each phase is as required connected in series with a resistance Z1' before being connected to a rectifying diode CR301 and another rectifying diode CR302. Output terminals of the output connectors T1R, T1S and T1T of lower voltage are respectively conducted to the rectifying diode CR301 and Output terminals of the output connectors T2R, T2S and T2T of higher voltage are respectively conducted to the rectifying diode CR302. An output positive terminal of a charging source V2 with higher voltage of the multi-step voltage charging source is comprised of the positive electrode output terminal from the rectifying diode CR302; an output positive terminal of a charging source V1 with lower voltage of the multi-step voltage charging source PS200 is comprised of the positive electrode output terminal from the rectifying diode CR301; and a negative electrode output terminal is comprised of the common connector T10 for the windings of each phase. In the circuit described above, both of the rectifying diodes CR301 and CR302 is provided in reverse direction for the negative electrode output terminals of both rectifying diodes CR301 and CR302 to form output negative terminals of various voltages with the common output connector T10 of windings of each phase functioning as the positive electrode output terminal. The voltage step of the multi-step voltage charging source PS200 is of two or more than two steps and the number of the adapted rectifying diode shall be increased accordingly. Fig. 28 shows a first preferred embodiment of a multi-step voltage charging source of the present invention having a three-phase transformer.
(8) As illustrated in Fig. 29, a 3-phase transformer T300 contains 3-phase input windings WOR, WOS and WOT, and two or more than two units of 3-phase output windings of same or different rated voltage and same or different rated current. One of those units of 3-phase output windings contains output connectors W1R, W1S and W1T of lower voltage and a common connector T101 while the other unit of the 3-phase output windings contains output connectors W2R, W2S and W2T of higher voltage output and a common connector T102. The output connector of each unit of the output windings is as required connected in series with a resistance Z1'. Within, the output windings W1R, W1S and W1T of lower voltage are respectively outputted to a rectifying diode CR301 to form a positive electrode output terminal of a charging source V1 of lower voltage output and a negative electrode output terminal is formed by the common connector T101. Another unit of output windings W2R, W2S and W2T of higher voltage are respectively outputted to a rectifying diode CR302 to form a positive electrode output terminal of a charging source V2 of higher voltage output and the negative electrode output terminal is formed by the common connector T102. Both DC output terminals of lower voltage and higher voltage indicate positive sequence connection in series while a common negative electrode is formed by a DC negative electrode output terminal from either unit of the output windings. A positive electrode output terminal of the charging source V1 with lower voltage is comprised of incorporating connectors in positive sequent series connection among the DC output terminals of the lower voltage and the higher voltage while the positive electrode output terminal of the charging source V2 with higher voltage is comprised of those DC positive electrode output terminals from another unit of output windings. The voltage step of the multi-step voltage charging source PS200 is of two or more than two steps and the number of the adapted bridge type diode is increased accordingly. Fig. 29 shows a second preferred embodiment of a multi-step voltage charging source of the present invention having a three-phase transformer.
(9) As illustrated in Fig. 30, a 3-phase transformer T300 contains 3-phase input windings WOR, WOS and WOT, and two or more than two units of 3-phase output windings WR, WS and WT of different rated voltage and same or different rated current. One of those units of 3-phase output windings contains output connectors W1R, W1S and W1T of lower voltage and a common connector T101 for windings of each phase with lower voltage. The other unit of the 3-phase output windings contains output connectors W2R, W2S and W2T of higher voltage output and a common connector T102 for windings of each phase with higher voltage. Output connectors W1R, W1S ,W2T and W2R, W2S, W2T of each unit of the output windings is as required respectively connected in series with a resistance Z1'before being respectively connected to a rectifying diode CR301 and another rectifying diode CR302. Within, the output terminals of the output windings W1R, W1S and W1T of lower voltage are respectively conducted to the rectifying diode CR301 and the output terminals of the output windings W2R, W2S and W2T of higher voltage are respectively conducted to the rectifying diode CR302. Those positive electrode output terminals from the rectifying diode CR302 are connected to form an output terminal with higher voltage of the multi-step voltage charging source PS200 and those positive electrode output terminals from the rectifying diode CR301 are connected to form an output terminal with lower voltage of the multi-step voltage charging source PS200. Meanwhile, both of the common connectors T101 and T102 from windings of each phase with lower voltage and higher voltage are connected to each other to from a common output terminal of negative electrode. In the circuit described above, both of the rectifying diodes CR301 and CF302 is provided in reverse direction for the common connection terminal output of negative electrode of the rectifying diode CR301 and the common connection output terminals of negative electrode of the rectifying CR302 to form output terminals of various voltages. Meanwhile, both of the common connectors T101 and T102 from windings of each phase with lower voltage and higher voltage are connected to each other to from a common output terminal of positive electrode. The voltage step of the multi-step voltage charging source PS200 is of two or more than two steps and the number of the adapted bridge type diode is increased accordingly. Fig. 30 shows a third preferred embodiment of a multi-step voltage charging source of the present invention having a three-phase transformer.
(10) As illustrated in Fig. 31, a 3-phase transformer T300 contains 3-phase input windings WOR, WOS and WOT, and two or more than two units of 3-phase output windings of same or different rated voltage and same or different rated current. One of those units of 3-phase output windings contains output connectors W1R, W1S and W1T of lower voltage while the other unit of the 3-phase output windings contains output connectors W2R, W2S and W2T of higher voltage output. The output connectors W1R, W1S W1T and W2R, W2S, W2T of each unit of the output windings is as required connected in series with a resistance Z1'. Within, the output windings W1R, W1S and W1T of lower voltage are respectively outputted to a bridge type rectifier BR301 and further to the positive electrode and negative electrode output terminals of a charging source V1 of lower voltage while the other unit of output windings W2R, W2S and W2T of higher voltage are outputted to a bridge type rectifier BR302 and further to positive electrode and negative electrode of a charging source V2 of higher voltage. DC output terminals of both charging sources V1 and V2 respectively with lower and higher voltages are connected in positive-sequence series with a DC negative electrode output terminal from either set of the output windings functioning as a common negative electrode. A positive electrode output terminal of the charging source V1 with lower voltage is comprised of a structure of incorporated connectors connected in positive-sequence series among the DC output terminals of lower and higher voltages while the DC positive electrode output terminals from the other unit output winding form a positive electrode output terminal of charging source V2 with higher voltage. The voltage step of the multi-step voltage charging source PS200 is of two or more than two steps and the number of the adapted bridge type diode is increased accordingly. Fig. 31 shows a fourth preferred embodiment of a multi-step voltage charging source of the present invention having a three-phase transformer.
(11) As illustrated in Fig. 32, a 3-phase transformer T300 contains 3-phase input windings WOR, WOS and WOT, and two or more than two units of 3-phase output windings of same or different rated voltage and same or different rated current. One of those units of 3-phase output windings contains output connectors W1R, W1S and W1T of a charging source V1 with lower voltage, and the other unit of output winding contains output connectors W2R, W2S and W2T of the output winding with higher voltage. The output connectors W1R, W1S, W1T and W2R, W2S, W1T of each unit of the output windings is as required connected in series with a resistance Z1'. Within, the output windings W1R, W1S and W1T of lower voltage are outputted to a bridge type rectifier BR301 to further output the positive electrode and the negative electrode output terminals of the charging source V1 with lower voltage; the other unit output windings W2R, W2S and W2T with higher voltage are outputted to a bridge type rectifier BR302 to further output the positive electrode and the negative electrode output terminals of the charging source V2 with higher voltage. Those negative electrode output terminals of the DC output terminals from both of the charging source V1 with lower voltage and the charging source V2 with higher voltage are connected to form a common negative electrode; those DC output terminals of positive electrode with lower voltage form a positive electrode output terminal of the charging source V1 with lower voltage; and those DC output terminals of positive electrode from the other output winding with higher voltage form a positive electrode output terminal of the charging source V2 with higher voltage. Those positive and negative electrodes described above is alternatively replaced by each other so that a common positive electrode is comprised of the positive electrode terminal with lower voltage connected to the positive electrode terminal with higher voltage, while those negative electrode terminals with both lower and higher voltages respectively for a negative electrode for various voltage steps. output terminals of lower voltage and higher voltage indicate positive sequence connection in series while a common negative electrode is formed by a DC negative electrode output terminal from either unit of the output windings. The voltage step of the multi-step voltage charging source PS200 is of two or more than two steps and the number of the adapted bridge type diode is increased accordingly. Fig. 32 shows a fifth preferred embodiment of a multi-step voltage charging source of the present invention having a three-phase transformer.

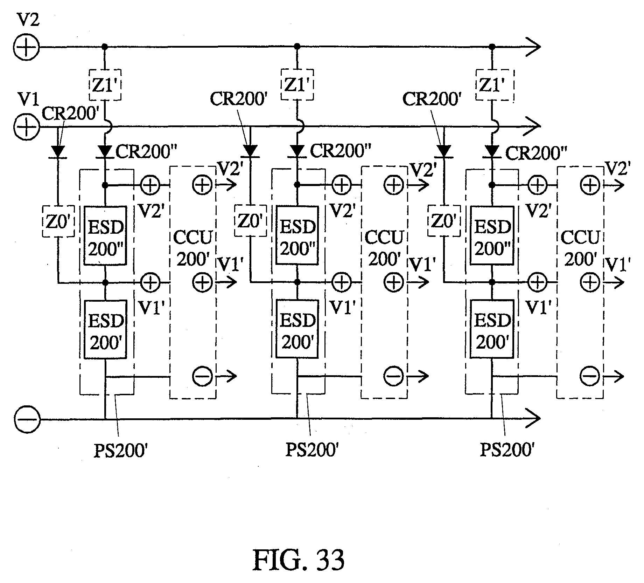

As illustrated in Fig. 33, a multi-step voltage charging source PS200' with relay function comprised of one unit or more than one unit of (dis)chargeable storage discharging devices ESD200" and ESD200' provided with relay function and connected in series is provided between the multi-step voltage charging source PS200 and an output load for the charging device with multi-step voltage charging source. The multi-step voltage charging source PS200' provided with relay function is adapted to an individual load having a capacity greater, smaller or equal to that of the multi-step voltage charging source PS200. Additional to a resistance device Z1' is connected in series as required, an inverse voltage prevention diode CR200" is provided between the charging source with higher voltage V2 of the multi-step voltage charging source PS200 and the charging source V2' of the (dis)chargeable storage discharging device ESD200' with relay function. The inverse voltage prevention diode CR200" is an optional device to be provided for connection in positive-sequence series with the output terminal of the charging source V2 with higher voltage to prevent current flowing in opposite direction, or as required one or more than one inverse voltage prevention diodes connected in series or serial-parallel to regulate the output voltage from its DC source by means of a positive-sequence drop.

As required, a resistance device Z0' and a inverse voltage prevention diode CR200' is connected in series between the charging sources V1 and V1' with loser voltage respectively from the (dis)chargeable storage discharging device ESD200" provided with relay function and the multi-step voltage charging source PS200. The inverse voltage prevention diode CR200' is an optional device to be positive-sequence connected in series with the output terminal of the charging source V1 with lower voltage or with the output terminal from other voltage with lower step to prevent current flowing in opposite direction. Or as required, one or more than one inverse voltage prevention diodes connected in series or series-parallel are provided to regulate the output voltage of DC source by means of positive-sequence drop.

One unit or more than one unit of multi-step voltage charging source PS200' provided with relay function is connected in parallel with the multi-step voltage charging source PS200, then is further outputted to the load thought the negative electrodes from the output terminal of the charging source V2' with higher voltage and the output terminal of the charging V1 with lower voltage of the multi-voltage charging source PS200' provided with relay function, or to be inputted into an optional center control unit CCU200' for control of relay function before being outputted to the load. The central control unit CCU200' for relay function relates to a device containing mechanic-electronic switch or solid-state power switch comprised of a drive circuit to control the operation of DC output voltage conversion, On-Off operation or timed cutoff, that is to control the multi-step voltage DC sources from the multi-step voltage charging source PS200' provided with relay function by means of its internal mechanic-electronic switch or solid-state power switch for conversion into multi-step DC output voltage as required; or to control the On-Off operation or timed cutoff by controlling the operation of the drive circuit so to control the operation of the primary control switch SW1 comprised of solid-state analog or switching device, or of mechanic-electronic switching device or of constantly closed thermal temperature switch, thus further to execute On-Off operation and timed cutoff output to the charging DC source. Fig. 33 shows a schematic view of a preferred embodiment of a multi-step voltage charging source provided with relay function of the present invention.

As disclosed above, the charging device with multi-step voltage charging source of the present invention takes the initiative control of the voltage of its charging source for controlling the operation of the charging current outputted from the charging device in the charging process by the (dis) chargeable storage discharging device so that when its charging arrives at the preset voltage, a cutoff is executed by the primary control switch connected in series with the set voltage detection & drive circuit and the charging circuit to stop charging to the (dis)chargeable storage discharging device. The concepts of the circuit and the operation of the multi-step voltage of the present invention significant reduce costs of hardware facilities required by the primary control switch offering simplified circuit, innovative concepts and economic benefit. Therefore, this patent application is duly filed accordingly.

## Claims

1. A charging device with a multi-step voltage charging source by taking active control over the charging source voltage to further control its outputted charging current in the course of a charging process executed by a (dis)chargeable storage discharging device so that, when the charging from the (dis)chargeable storage discharging device arrives at a preset voltage, a primary control switch connected in series with a charging circuit is detected and driven by the preset voltage to execute cut-off so as to stop charging the (dis)chargeable storage discharging device.

2. A charging device with a multi-step voltage charging source that has a (dis)chargeable storage discharging device on load side to be charged by the multi-step charging source up to preset voltage, then the charging status is taken over for smaller charging current by a charging source with higher voltage, or the charging current is cut off by operating a primary control switch connected in series with a charging circuit, or by turning the primary switch connected in series with a charging circuit to open circuit thus to cut off the charging to the (dis)chargeable storage discharging device, essentially comprised of :
- a multi-step voltage charging source PS200: related to a multi-voltage DC source of two or more than two steps, or a DC source of multi-step voltage directly rectified by AC source, or a multi-step voltage DC source comprised of a secondary AC output terminal after transformation by a transformer then rectified; including at least two units of charging source of different voltages V1 with the lower voltage and V2 with higher voltage, or more than two multi-step voltage charging source of different voltages, and the multi-step charging sources of different voltages can be comprised of charging sources of the same or different current capacity connected in series of positive sequence polarity or sharing the common negative electrode or the common positive electrode for outputting to a load comprised of related charging control circuit through conduction connector and the (dis)chargeable discharging device ESD100;
- a central control unit CCU200: comprised of a drive circuit containing a mechanic-electronic switch or a solid-state power switch device to control conversion of DC output voltage and On-Off or timed cutoff, wherein, the central control unit CCU200 controls the operation of converting multi-step voltage DC source from the multi-step voltage charging source PS200 into a required multi-step voltage DC output voltage by its internal mechanic-electronic switch or solid-state power switch; or controls the operation of a primary control switch SW1 comprised of a solid analog or switching device or a mechanic-electronic switching device or a constantly closed thermal temperature switch by controlling the drive circuit to execute On-Off operation or timed cutoff, thus further to control the On-Off operation of the charging DC source and the output of timed cutoff; the drive circuit being optional and is selected for all or partial functions;
- a (dis)chargeable discharging storage device ESD100: comprised of a Ni-Cd, Ni-H, Ni-Zn, Ni-Fe or Lithium, or lead storage battery, or any other (dis)chargeable secondary battery functioning as a charging source or a load to be charged;
- a primary switch SW1: comprised of a solid analog or switching device or a mechanic-electronic switching device or a constantly closed thermal temperature switch, wherein,
(1) The primary control switch SW1 being comprised of a solid-state analog or switching device Q100 related to an optional to be driven by a pilot drive device CD 100 comprised of a mechanic-electronic or solid-state electronic device for converting the primary control switch SW1 comprised of the solid-state analog or switching device Q100 into open circuit once the (dis) chargeable storage discharging device ESD100 being charged up to the preset voltage; or further converting to control the operation of circuit break when indicating a state of analog characteristics of a selected device with gradually increase resistance in the course of voltage rise detection;
(2) the primary control switch SW1 being comprised of a mechanic switching device MS 100 with its operation controlled by an electric energy driven coil W100; so that when the (dis)chargeable storage discharging device ESD100 being charged up to the preset voltage, the electric energy driven coil W100 controls the operation of the primary control switch SW1 comprised of the mechanic-electronic switching device MS 100 to convert into break to cut off charging to the (dis)chargeable storage discharging device ESD100; and
(3) the primary control switch SW1 being comprised of the constantly closed thermal temperature switch THS 100 containing thermal bi-metal tab or memory alloy with equivalent function, a pilot drive function being executed by the primary control switch SW1 and an electric heating device AH100 coupled to the constantly closed thermal temperature switch THS100, and subject to control by preset voltage detection and drive circuit VD&D100 to convert the inputted electric energy into thermal energy so to heat and convert the coupled constantly closed thermal temperature switch THS100 into an open circuit, thus to cut off the charging current to the (dis)chargeable storage discharging device ESD100; and once the temperature dropping to a critical temperature, a return being created to control the operation of the contact to return to a closed circuit;
- A resistance device Z0: related to a resistive device comprised of a mechanic -electric resistance device or a solid-state resistance device, a diode, or other resistive device that converts electric or thermal energy into optical, connected in series with the output terminal of the charging source V1 having the lower voltage to execute differential current limit with a load side; and the voltage limiting resistance device is provided or not as required by the circuit;
- a resistance device Z1: related to a resistive device comprised of a mechanic-electric resistance device or a solid-state resistance device, diodes, or any other device provided with a resistive device that converts electric, thermal energy into optical energy, connected in series with the output terminal of the charging source V2 having the lower voltage and connected in series with the resistance device Z0 or in parallel with the resistance device Z0 before being outputted to the load to execute differential current limit with a load side; and the number of the resistance device Z1 is increased depending on that of the step of the voltage of the multi-step charging source to be connected in series with the output terminal of the voltage source of a selected step; and the voltage limiting resistance device is provided or not as required by the circuit;
- Set voltage detection and drive circuit VD&D100: comprised of a mechanic-electronic or a solid-state electronic device, is provided as an option to be connected in parallel with both terminals of a DC charging source or a (dis) chargeable storage discharging device ESD100; the Set voltage detection and drive circuit VD&D100 is not functioning when the (dis)chargeable storage discharging device ESD100 being at its LV status at initial charging; later the charging source V2 with higher voltage takes over when the terminal voltage of the (dis)chargeable storage discharging device BSD100 is higher than that of the charging source V1 with the lower voltage, and the value of the divided current in increased by driving the set voltage detection and drive device VD&D100 when the charging voltage from the (dis)chargeable storage discharging device BSD100 rises up to approach the preset voltage thus to increase the current flowing through the resistance device Z1(or the resistance device Z0 connected in series with it) connected in series with the charging source V2 with higher voltage, and further to increase the drop at the resistance device Z1 (or the resistance device Z0 connected in series with it) for reducing the voltage to the (dis)chargeable storage discharging device BSD100; so that the charging current is changed to drive the primary control switch SW1 connected in series with the charging circuit to cut off the charging current to the (dis)chargeable storage discharging device ESD100 when its terminal voltage reaches the preset voltage; the circuit and device selected for the primary control switch SW1 include:
(1) The set voltage detection and drive circuit VD&D100 is provided to drive a dedicated pilot drive power control device CD 100 comprised of a solid-state circuit device or a mechanic-electronic device to drive a primary control switch SW1 comprised of a solid-state switching device Q100 which is comprised of transistor and a gate voltage device SCR; or
(2) The set voltage detection and drive circuit VD&D100 is provided to drive a dedicated pilot drive power control device CD 100 comprised of a drive coil W100 from a mechanic-electronic switching device MS100 to control a primary control switch SW1 comprised of the solid-state switching device MS 100; or
(3) The set voltage detection and drive circuit VD&D100 is provided to drive and heat up a dedicated pilot drive power control device CD 100 comprised of electric heating device AH 100, and further to drive the primary control switch SW1 comprised of the constantly closed thermal temperature switch THS100;
- a limiting resistance Z100: an optional mechanic-electronic or solid-state electronic resistance device, diode or any other device provided with a resistance device that converts electric energy or thermal energy into optical energy; when a subsequent small current make-up charging is required to be executed by the (dis)chargeable storage discharging device, the limit resistance Z100 is connected in parallel with both terminals of the primary current contact of the primary control switch SW1 so that when the primary control switch SW1 is interrupted, the DC charging source continues to execute small current charging to the (dis)chargeable storage discharging device through the limit resistance Z100;
- a spark arresting device SP100: an optional device comprised of resistance capacitor or semi-conductor spark arresting device to be directly connected in parallel with both terminals of the contact of the constantly closed thermal temperature switch THS100 depending on the polarity of the source, or a limit resistance Z100 is connected in series before the parallel connection so to arrest spark for inhibiting EMI noise when the constantly closed thermal temperature switch THS100 contact turns from constantly closed to constantly opened;
- a conduction contact (or a plug-socket unit) P0: an optional device of conduction contact or plug-socket unit comprised of a mechanic-electronic structure with one terminal connected to a charging source and its related circuit on the source side, the other terminal relatively coupled connects the (dis)chargeable storage discharging device BSD100 and its related circuit on the load side;
- an isolating diode CR100: related to an optional device comprised of one or more than one diode to be connected in series or series-parallel between the charging source and the (dis)chargeable storage discharging device; or when required, one or more than one diode is connected in series or series-parallel to regulate the output voltage of the DC source by means of positive drop;
- an inverse voltage prevention diode CR200: an optional device to be positive-sequence connected in series with the output terminal of the charging source V1 with the lower voltage or any other voltage with lower step to prevent inverse voltage; or alternatively, one or more than one diodes to prevent inverse voltage are connected in series or series-parallel by taking advantage of their positive-sequence drop in regulating the output voltage of the DC source; and
- a secondary resistance Z200: related to a resistive or inductive resistance device, or a mix of both, or any load from other resistance device with resistivity, provided as an optional device to be connected in parallel with both terminals of the pilot drive power controlled device CD 100 to execute dividing the current; the secondary resistance Z200 in the circuit is provided to be connected in parallel with both terminals of the dedicated pilot drive power controlled device CD100 to regulate division ratio so to gradually reduce the charging current to the (dis)chargeable storage discharging device on the load side, laving the dedicated pilot drive power controlled device CD 100 to control the operation of an analog or switching type transistor, MOSFET, IGBT, PUB or gate voltage device SCR, or other solid-state analog or switching device Q100.

3. A charging device with a multi-step voltage charging source as claimed in Claim 2, wherein, a differential zener diode ZD101 is connected in series with the drive coil W100 of the mechanic-electronic switch and the secondary resistance Z200 is provided to be connected in parallel with both terminals of the drive coil W100.

4. A charging device with a multi-step voltage charging source as claimed in Claim 2, wherein, the differential zener diode ZD101 is connected in series with a differential resistance R1 to drive the relay transistor Q1 and the secondary resistance Z200 is connected in parallel with both terminals of the drive coil W100, the drive coil W100 is connected in parallel with a flywheel diode CR1 as required before being connected in series with the relay transistor Q1, to regulate the division ratio for gradually reducing the charging current to the load side (dis)chargeable storage discharging device while the operation of the mechanic-electronic switching device MS 100 to be controlled by the drive coil W100.

5. A charging device with a multi-step voltage charging source as claimed in Claim 2, wherein, the secondary resistance Z200 is connected in parallel with both terminals of a heating device AH100 controlled by a dedicated pilot drive power controlled device CD 100.

6. A charging device with a multi-step voltage charging source as claimed in Claim 2, wherein, the secondary resistance Z200 is connected in parallel with both terminals of the heating device AH100 driven by the relay transistor Q1 to regulate the division ratio for gradually reducing the charging current to the load side (dis)chargeable storage discharging device; and the operation of the relay transistor Q1 connected in series with the heating device AH100 is controlled by the dedicated pilot drive power controlled device CD100, and the operation of the constantly closed thermal temperature switch THS100 is controlled by the heating device AH100.

7. A charging device with a multi-step voltage charging source as claimed in Claim 2 comprised of:
- a multi-step voltage charging source PS200: related to a multi-voltage DC source of two or more than two steps, or a DC source of multi-step voltage directly rectified by AC source, or a multi-step voltage DC source comprised of a secondary AC output terminal after transformation by a transformer then rectified; including at least two units of charging source of different voltages V1 with the lower voltage and V2 with higher voltage, or more than two multi-step voltage charging source of different voltages, and the multi-step charging sources of different voltages can be comprised of charging sources of the same or different current capacity connected in series of positive sequence polarity or sharing the common negative electrode or the common positive electrode for outputting to a load comprised of related charging control circuit through conduction connector and the (dis)chargeable discharging device ESD100;
- a central control unit CCU200: comprised of a drive circuit containing a mechanic-electronic switch or a solid-state power switch device to control conversion of DC output voltage and On-Off or timed cutoff, wherein, the central control unit CCU200 controls the operation of converting multi-step voltage DC source from the multi-step voltage charging source PS200 into a required multi-step voltage DC output voltage by its internal mechanic-electronic switch or solid-state power switch ; or controls the operation of a primary control switch SW1 comprised of a solid analog or switching device or a mechanic-electronic switching device or a constantly closed thermal temperature switch by controlling the drive circuit to execute On-Off operation or timed cutoff, thus further to control the On-Off operation of the charging DC source and the output of timed cutoff; the drive circuit being optional and is selected for all or partial functions;
- an inverse voltage prevention diode CR200: an optional device to be positive-sequence connected in series with the output terminal of the charging source V1 with the lower voltage or any other voltage with lower step to prevent inverse voltage; or alternatively, one or more than one diodes to prevent inverse voltage are connected in series or series-parallel by taking advantage of their positive-sequence drop in regulating the output voltage of the DC source;
- a resistance device Z1: related to a resistive device comprised of a mechanic-electric resistance device or a solid-state resistance device, diodes, or any other device provided with a resistive device that converts electric, thermal energy into optical energy, connected in series with the output terminal of the charging source V2 having the lower voltage and connected in series with the resistance device Z0 or in parallel with the resistance device Z0 before being outputted to the load to execute differential current limit with a load side; and the number of the resistance device Z1 is increased depending on that of the step of the voltage of the multi-step charging source to be connected in series with the output terminal of the voltage source of a selected step; and the voltage limiting resistance device is provided or not as required by the circuit;
- a resistance device Z0: related to a resistive device comprised of a mechanic-electric resistance device or a solid-state resistance device, a diode, or other resistive device that converts electric or thermal energy into optical, connected in series with the output terminal of the charging source V1 having the lower voltage to execute differential current limit with a load side; and the voltage limiting resistance device is provided or not as required by the circuit;
And other optional devices including related set voltage detection and drive device VD&D100, the pilot drive power controlled device CD 100, the isolating diode CR100, the primary control switch SW1, the limiting resistance Z100, the spark arresting device SP 100, the secondary resistance Z200, the (dis) chargeable storage discharging device ESD100, and the conduction contact (or plug-socket unit) P0. Wherein, the primary control switch SW1 is provided on the charging source side to control the operation of the charging source side, and further control the charging to the (dis) chargeable storage discharging device ESD100 by means of the conduction contact (or plug-socket unit) P0. The set voltage detection and drive circuit VD&D100 is connected in parallel on the charging source side to control the operation of the pilot drive power controlled CD 100, and further to control the operation of the primary control switch SW1 (comprised of the solid-state analog or switching device Q100 or the mechanic-electronic switching device MS 100, or the constantly closed thermal temperature switch THS100) provided on the source side.

8. A charging device with a multi-step voltage charging source as claimed in Claim 2, wherein, the circuit is comprised of the multi-step voltage charging source PS200, the central control unit CCU200, the inverse voltage prevention diode CR200, the resistance device Z1 and the resistance Z0 same as those claimed in Claim 7, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device BSD100, and the conduction contact (or plug-socket unit) P0; wherein, the primary control switch SW1 is provided to control the operation of the load side; the set voltage detection and drive circuit VD&D100 connected in parallel on the charging source side controls the operation of the pilot drive power controlled CD 100 through the conduction contact (or plug-socket unit) P0, and further controls the operation of the primary control switch SW1 (comprised of the solid-state analog or switching device Q100 or the mechanic-electronic switching device MS 100, or the constantly closed thermal temperature switch THS100) provided on the load side to control the operation of the charging to the (dis)chargeable storage discharging device ESD100.

9. A charging device with a multi-step voltage charging source as claimed in Claim 2, wherein, the circuit is comprised of the multi-step voltage charging source PS200, the central control unit CCU200, the inverse voltage prevention diode CR200, the resistance device Z1 and the resistance Z0 same as those claimed in Claim 6, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0; wherein, the primary control switch SW1 is provided on the load to control the operation of the load side; the set voltage detection and drive circuit VD&D100 and the pilot drive power controlled device CD100 connected to it are provided on the load side to control the operation of the primary control switch SW1 (comprised of the solid-state analog or switching device Q 100 or the mechanic-electronic switching device MS 100, or the constantly closed thermal temperature switch THS100) on the load side through the conduction contact (or plug-socket unit) P0, and further to control the operation of the charging to the (dis)chargeable storage discharging device ESD100.

10. A charging device with a multi-step voltage charging source as claimed in Claim 2, wherein, the circuit is comprised of the multi-step voltage charging source PS200, the central control unit CCU200, the inverse voltage prevention diode CR200, the resistance device Z1 and the resistance Z0 same as those claimed in Claim 6, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0; wherein, the primary control switch SW1 is provided on the load side to control the operation of the charging source side. The set voltage detection and drive circuit VD&D100 and the pilot drive power controlled CD 100 connected to it are provided on the load side to control the operation of the primary control switch SW1 (comprised of the solid-state analog or switching device Q100 or the mechanic-electronic switching device MS 100, or the constantly closed thermal temperature switch THS100) provided on the source side through the conduction contact (or plug-socket unit) P0, and further controls to control the operation of the charging to the (dis)chargeable storage discharging device ESD100.

11. A charging device with a multi-step voltage charging source as claimed in Claim 2, wherein, the circuit is comprised of the multi-step voltage charging source PS200, the central control unit CCU200, the inverse voltage prevention diode CR200, the resistance device Z1 and the resistance Z0 same as those claimed in Claim 6, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device BSD100, and the conduction contact (or plug-socket unit) P0; wherein, the set voltage detection and drive circuit VD&D100 and the pilot drive power controlled CD100 have one terminal connected to the DC charging source side and the other terminal to the load side. The set voltage detection and drive circuit VD&D100 controls the operation of the pilot drive power controlled device CD100 connected to it, the operation of the primary control SW1 provided on the source side, and further the operation of the primary control switch SW1 (comprised of the solid-state analog or switching device Q100 or the mechanic-electronic switching device MS100, or the constantly closed thermal temperature switch THS100)provided on the load side thus to control the operation of the charging to the (dis)chargeable storage discharging device ESD100 through the conduction contact (or plug-socket unit) P0.

12. A charging device with a multi-step voltage charging source as claimed in Claim 2, wherein, the circuit is comprised of the multi-step voltage charging source PS200, the central control unit CCU200, the inverse voltage prevention diode CR200, the resistance device Z1 and the resistance Z0 same as those claimed in Claim 7, and other optional devices including related set voltage detection and drive device VD&D100, the pilot drive power controlled device CD100, the isolating diode CR100, the primary control switch SW1, the limiting resistance Z100, the spark arresting device SP100, the secondary resistance Z200, the (dis)chargeable storage discharging device ESD100, and the conduction contact (or plug-socket unit) P0; wherein, the set voltage detection and drive circuit VD&D100 and pilot drive power controlled CD 100 connected to it have one terminal connected to the DC charging source side and the other terminal to the load side, the set voltage detection and drive circuit VD& D100 controls the operation of the pilot drive power control device CD100, thus the operation of the primary control switch SW1 (comprised of the solid-state analog or switching device Q100 or the mechanic-electronic switching device MS 100, or the constantly closed thermal temperature switch THS100) provided on the load side to control the operation of the charging to the (dis)chargeable storage discharging device ESD100.

13. A charging device with a multi-step voltage charging source as claimed in Claim 2, 7, 8 9, 10, 11 or 12, wherein, the optional set voltage detection & drive circuit VD&D100 as disclosed in those preferred embodiments of the present invention is located at where:
- the set voltage detection & drive circuit VD&D100 is connected in parallel on the load side and incorporated with the (dis) chargeable storage discharging device BSD100; or
- the set voltage detection & drive circuit VD&D100 is connected in parallel on the load side and separated from the (dis)chargeable storage discharging device ESD100.

14. A charging device with a multi-step voltage charging source as claimed in Claim 2, wherein, the optional set voltage detection & drive circuit VD&D100 and the circuit of the pilot drive power controlled device CD100 is located at where
- both of the set voltage detection & drive circuit VD&D100 and the circuit of the pilot drive power controlled device CD100 are connected to each other then further connected in parallel on the load side, and the set voltage detection & drive circuit controls the operation of the pilot drive power controlled device CD 100 connected to it; or
- both of the set voltage detection & drive circuit VD&D100 and the circuit of the pilot drive power controlled device CD100 are connected to each other or in parallel on the load side, and the set voltage detection & drive circuit controls the operation of the pilot drive power controlled device CD 100 connected to it.

15. A charging device with a multi-step voltage charging source as claimed in Claim 2, 7, 8, 9, 10, 11 or 12, wherein, the optional device of the constantly closed thermal temperature switch THS 100 is located at where:
- the constantly closed contact of the constantly closed thermal temperature switch THS 100 is connected in series on the load side of the output so to be directly connected in series with the (dis)chargeable storage discharging device ESD100. The constantly thermal temperature switch THS 100 indicates a good thermocouple structure with the (dis)chargeable storage discharging device ESD100 to protect the latter during its charging control and operation and over-current (dis) charging; or
- the constantly closed contact of the constantly closed thermal temperature switch THS 100 is connected in series on the load side of the output so to be directly connected in series with the (dis)chargeable storage discharging device ESD100. The constantly thermal temperature switch THS100 is separated from the (dis)chargeable storage discharging device ESD100 to protect the latter during its charging control and operation and over-current charging; or
- the constantly closed contact of the constantly closed thermal temperature switch THS 100 is connected in series on the source side so to be connected in series with charging source. The constantly thermal temperature switch THS 100 indicates a good thermocouple structure with the (dis)chargeable storage discharging device ESD100 to protect the latter during its charging control and operation by the (dis)chargeable storage discharging device and over-current charging; or
- the constantly closed contact of the constantly closed thermal temperature switch THS 100 is connected in series on the source side so to be connected in series with charging source. The constantly thermal temperature switch THS100 is separated from the (dis)chargeable storage discharging device ESD100 to protect the latter during its charging control and operation by the (dis)chargeable storage discharging device and over-current charging.

16. A charging device with a multi-step voltage charging source as claimed in Claim 2, 7, 8, 9, 10, 11 or 12 wherein, the optional limiting resistance Z100 is provided at where
- If make-up charging is not required after the charging current is cut by the primary control switch SW1, the limiting resistance Z100 is not required; or
- If small current make-up charging is required after the charging current is cut by the primary control switch SW1, the limiting resistance Z100 is connected in parallel with both terminals of the contact for control and operation of the primary control switch SW1 so that when the primary control switch SW1 is turned to open circuit, the limiting resistance Z100 executes small current make-up charging to the (dis)chargeable storage discharging device ESD100, or
- the limiting resistance Z100 is provided in a structure separated from the primary control switch SW1; or
- the limiting resistance Z100 indicates an open common structure with the primary control switch SW1 comprised of the constantly closed thermal switch THS100 so to keep the primary control switch SW1 being constantly heated to maintain the closed status by means of the thermal energy generated from electric heating; or
- the limiting resistance Z100 indicates a sealed common structure of good thermocouple with the primary control switch SW1 comprised of the constantly closed thermal switch THS100 so to keep the primary control switch SW1 being constantly heated to maintain the closed status.

17. A charging device with a multi-step voltage charging source as claimed in Claim 2, wherein, the primary control and set voltage detection & drive circuit of the charging device with multi-step charging source is further replaced by a divided circuit device with a selectable conduction voltage connected in parallel with an output terminal so that when the output terminal or the (dis)chargeable storage discharging device ESD100 being charged arrives at the selected voltage, divided current and voltage are created by the divided circuit device with a selectable conduction voltage essentially comprised of:
- a multi-step voltage charging source PS200: related to a multi-voltage DC source of two or more than two steps, or a DC source of multi-step voltage directly rectified by AC source, or a multi-step voltage DC source comprised of a secondary AC output terminal after transformation by a transformer then rectified; including at least two units of charging source of different voltages V1 with the lower voltage and V2 with higher voltage, or more than two multi-step voltage charging source of different voltages, and the multi-step charging sources of different voltages can be comprised of charging sources of the same or different current capacity connected in series of positive sequence polarity or sharing the common negative electrode or the common positive electrode for outputting to a load comprised of related charging control circuit through conduction connector and the (dis)chargeable discharging device ESD100;
- a central control unit CCU200: comprised of a drive circuit containing a mechanic-electronic switch or a solid-state power switch device to control conversion of DC output voltage and On-Off or timed cutoff, wherein, the central control unit CCU200 controls the operation of converting multi-step voltage DC source from the multi-step voltage charging source PS200 into a required multi-step voltage DC output voltage by its internal mechanic-electronic switch or solid-state power switch ; or controls the operation of a primary control switch SW1 comprised of a solid analog or switching device or a mechanic-electronic switching device or a constantly closed thermal temperature switch by controlling the drive circuit to execute On-Off operation or timed cutoff, thus further to control the On-Off operation of the charging DC source and the output of timed cutoff; the drive circuit being optional and is selected for all or partial functions;
- a (dis)chargeable discharging storage device ESD100: comprised of a Ni-Cd, Ni-H, Ni-Zn, Ni-Fe or Lithium, or lead storage battery, or any other (dis)chargeable secondary battery functioning as a charging source or a load to be charged;
- a resistance device Z0: related to a resistive device comprised of a mechanic-electric resistance device or a solid-state resistance device connected to the output terminal of the source to execute differential limiting function with the load side, and can be provided or not as required by the circuit;
- a resistance device Z1: related to a resistive device comprised of a mechanic-electric resistance device or a solid-state resistance device, diodes, or any other device provided with a resistive device that converts electric, thermal energy into optical energy, connected in series with the output terminal of the charging source V2 having the lower voltage and connected in series with the resistance device Z0 or in parallel with the resistance device Z0 before being outputted to the load to execute differential current limit with a load side; and the number of the resistance device Z1 is increased depending on that of the step of the voltage of the multi-step charging source to be connected in series with the output terminal of the voltage source of a selected step; and the voltage limiting resistance device is provided or not as required by the circuit;
- a conduction contact (or a plug-socket unit) P0: an optional device of conduction contact or plug-socket unit comprised of a mechanic-electronic structure with one terminal connected to a charging source and its related circuit on the source side, the other terminal relatively coupled connects the (dis)chargeable storage discharging device ESD 100 and its related circuit on the load side;
- an isolating diode CR100: related to an optional device comprised of one or more than one diode to be connected in series or series-parallel between the charging source and the (dis)chargeable storage discharging device; or when required, one or more than one diode is connected in series or series-parallel to regulate the output voltage of the DC source by means of positive drop;
- an inverse voltage prevention diode CR200: an optional device to be positive-sequence connected in series with the output terminal of the charging source V1 with the lower voltage or any other voltage with lower step to prevent inverse voltage; or alternatively, one or more than one diodes to prevent inverse voltage are connected in series or series-parallel by taking advantage of their positive-sequence drop in regulating the output voltage of the DC source; and
- a divided circuit device with selectable conduction voltage VL100: related to a divided circuit device provided with selectable conduction voltage and dividing current functions having (1) a zener voltage from a zener diode as the conduction voltage, or (2) a positive-sequence drop voltage from a diode as the conduction voltage, or (3) an reverse-sequence use of a drop voltage from a diode, or (4) a positive-sequence drop voltage from a light emission diode as the conduction voltage, or (5) one or more than one combination among (1) through (4).

18. A charging device with a multi-step voltage charging source as claimed in Claim 17, wherein, the divided circuit device with selectable conduction voltage is connected in series between a collection electrode C and a base electrode of the power transistor Q200, and as required a differential resistance R1 is connected in parallel between the base electrode C and an emission electrode E so that when the voltage between the collection electrode C and the emission electrode E of the power transistor Q200 is greater than the voltage set by the divided circuit device VL100 with selectable conduction voltage and the working voltage of the power transistor Q200 itself, the power transistor Q200 is able to execute relative conduction; and in addition to being directly connected in parallel with one terminal of the divided circuit device VL100 with selectable conduction voltage, the collection electrode C of the power transistor Q200 is connected in series with a resistance device Z500 before being connected in parallel with one terminal of the divided circuit device VL100 with selectable conduction voltage.

19. A charging device with a multi-step voltage charging source as claimed in Claim 17, wherein, a variable resistance VR100 is connected in parallel between the collection electrode C and the emission electrode E of the power transistor Q200 while an adjustable pin from the variable resistance is further connected to the base electrode B of the power transistor Q200 through the divided circuit device VL100 with selectable conduction voltage for the power transistor Q200 to execute relative conduction when the voltage between the collection electrode C and the emission electrode E of the power transistor Q200 arrives at the preset value according to the regulation by the variable resistance VR100; in addition to being directly connected to one fixed pin from the variable resistance VR100, the collection electrode C of the power transistor Q200 as required is first connected in series with a resistance device Z500 before being connected to one fixed pin from the variable resistance VR100.

20. A charging device with a multi-step voltage charging source as claimed in Claim 17, wherein, alternatively, the divided circuit device VL100 with selectable conduction voltage is further connected in series with a limiting resistance R400 before being further connected in series between a positive electrode A and a gate electrode G of the gate voltage device SCR1; as required a differential resistance R1 is connected in parallel between the gate electrode G and a negative electrode K so that when the voltage between the positive electrode A and the gate electrode G of the gate voltage device SCR1 is greater than the preset voltage of the divided circuit device V1100 with a selectable conduction voltage and the working voltage of the gate voltage device SCR1, the gate voltage device SCR1 is triggered off and conducted; in addition to being directly connected in parallel with one terminal of the divided circuit device VL100 with selectable conduction voltage, the positive electrode A of the gate voltage device SCR1 is as required connected in series with a resistance Z500 before being connected in parallel with a terminal of the divided circuit device VL100 with selectable conduction voltage.

21. A charging device with a multi-step voltage charging source as claimed in Claim 17, wherein, alternatively, the divided circuit device VL100 with selectable conduction voltage is further connected in series with a limiting resistance R400 before being further connected in series between a positive electrode A and a negative electrode K of the gate voltage device SCR1; and an adjustable pin from the variable resistance VR100 is conducted to the Gate G of the gate voltage device SCR1 through the divided circuit device VL100 with selectable conduction voltage, so that when the voltage between the gate electrode G and the negative electrode K arrives at the preset value, the gate voltage device SCR1 is triggered off and conducted as regulated by the variable resistance VR100, voltage device SCR1 is greater than the preset voltage of the divided circuit device V1100 with a selectable conduction voltage and the working voltage of the gate voltage device SCR1, the gate voltage device SCR1 triggers off the conduction; in addition to being directly connected to a fixed pin of the variable resistance VR100 (or a pin of the limiting resistance R400), the positive electrode A of the gate voltage device SCR1 is as required first connected in series with a resistance device Z500 before being connected to a fixed pin of the variable resistance VR100(or a pin of the limiting resistance R400).

22. A charging device with a multi-step voltage charging source as claimed in Claim 2, wherein, the multi-step voltage charging source PS200 with two or more than two steps is comprised of two or more than two units of (dis)chargeable storage discharging device ESD200 of same or different capacity, or same or different voltage that are connected in positive sequence series into a multi-step voltage DC sources having two or more than two outputs with different voltages as illustrated in Fig. 22; within, the one or more than one unit of (dis)chargeable storage discharging device ESD200 is comprised of one or more than one (dis)chargeable storage discharging device ESD100 connected in series or parallel.

23. A charging device with a multi-step voltage charging source as claimed in Claim 2, wherein, two or more than two units of (dis)chargeable storage discharging device ESD200 of same or different capacity, or same or different voltage that are connected by their common negative electrode (or common of positive electrode) into a multi-step voltage DC sources having two or more than two outputs with different voltages; within, the one or more than one unit of (dis)chargeable storage discharging device ESD200 is comprised of one or more than one (dis)chargeable storage discharging device ESD100 connected in series or parallel

24. A charging device with a multi-step voltage charging source as claimed in Claim 2, wherein, a multi-step voltage charging source PS200 of two or more than two steps is comprised of a single-phase transformer T100 with output winding contains an input winding W0 and an output winding W0' having two or more than two output connectors T0, T1 and T2 of different rated voltage and the same or different rated current; the output winding W0' shares the output connector T0 of common terminal, the output connector T1 with lower voltage and the output connector T2 with higher voltage T2; and as required the output connector T2 with higher voltage is alternatively connected in series with a resistance device Z1' before jointing the output connector T0 to be conducted to a bridge type rectifier BR2 while the output connector T1 with higher voltage is alternatively connected in series with a resistance device Z1' before jointing the output connector T0 to be conducted to a bridge type rectifier BR1; the negative electrode output terminal at an DC output terminal of both of the bridge type rectifier BR1 and the bridge type rectifier BR2 is jointly connected so that a positive electrode output terminal of the bridge type rectifier BR2 forms an output terminal of a charging source V2 with higher voltage of the multi-step voltage charging source PS200, and a positive electrode output terminal of the bridge type rectifier BR1 forms an output terminal of a charging source V1 with lower voltage of the multi-step voltage charging source PS200; and the positive electrode output terminals of both bridge type rectifiers BR1 and BR2 are jointly connected while negative electrode output terminals of both bridge type rectifiers BR1 and BR2 indicate various voltage outputs, and the voltage step of the multi-step voltage charging source PS200 is of two or more than two steps and the number of the adapted bridge type rectifier is increased accordingly

25. A charging device with a multi-step voltage charging source as claimed in Claim 2, wherein, a multi-step charging source PS200 of two or more than two steps is comprised of a single-phase transformer T100 with output winding containing an input winding W0 and two or more than two output windings W1 and W2 of the same or different rated voltage and the same or different rated current; as required, each unit of output winding is respectively connected in series with a resistance device Z1' and the output winding W1 is outputted to a bridge type rectifier BR1 while the other W2 to a bridge type rectifier BR2; a DC output terminal from the bridge type rectifier BR1 indicates positive sequence series with a DC output terminal from the bridge type rectifier BR2 having the negative electrode output terminal from the bridge type rectifier BR1 as the common negative electrode. The positive electrode output terminal of a charging source V1 with the lower voltage is comprised of incorporated positive-sequence series by two units of the bridge type rectifiers BR1 and BR2 while the positive electrode output terminal of a charging source V2 with the higher voltage is comprised of the positive electrode output terminal from another unit of bridge type rectifier BR2; and the voltage step of the multi-step voltage charging source PS200 is of two or more than two steps and the number of the adapted bridge type rectifier is increased accordingly.

26. A charging device with a multi-step voltage charging source as claimed in Claim 2, wherein, a multi-step voltage charging source PS200 of two or more than two steps is comprised of a single-phase transformer T100 with output winding containing an input winding W0 and two or more than two output windings W1 and W2 of the same or different rated voltage and the same or different rated current; as required, each unit of output winding is respectively connected in series with a resistance device Z1' and the output winding W1 is outputted to a bridge type rectifier BR1 while the other W2 to a bridge type rectifier BR2. A DC output negative terminal from the bridge type rectifier B1 and that from the bridge type rectifier BR2 indicate a common connection and function as a common negative electrode; a positive electrode output terminal of a charging source V1 with lower voltage is comprised of the positive electrode output terminal from the bridge type rectifier BR1 while a positive electrode output terminal of a charging source V2 with higher voltage is comprised of the positive electrode output terminal from the bridge type rectifier BR2; or alternatively, the positive electrode output terminals from both bridge type rectifiers BR1 and BR2 are jointly connected while outputs of various voltages are comprised of the negative electrode output terminals from both bridge type rectifiers BR1 and BR2; and the voltage step of the multi-step voltage charging source PS200 is of two or more than two steps and the number of the adapted bridge type rectifier is increased accordingly

27. A charging device with a multi-step voltage charging source as claimed in Claim 2, wherein, a multi-step voltage charging source PS200 of two or more than two steps is comprised of a single-phase transformer T100 with output winding containing an input winding W0 and an output winding W0' containing two or more than two units of transformer of different rated voltage, the same or different rated current and an intermediate output connector T10, an output connector T1 of lower voltage and an output connector T2 of higher voltage; as required, the output terminals of the output connector T1 of lower voltage and the output connector T2 of higher voltage is respectively connected in series with a resistance device Z1'. The output connector T2 of higher voltage is positive-sequence connected in series with a rectifying diode CR302 with the positive electrode output terminal from the rectifying diode CR302 to form the output positive terminal of a charging source V2 with higher voltage of the multi-step voltage charging source PS200; the output connector T1 of lower voltage is positive-sequence connected in series with a rectifying diode CR301 with a positive electrode output terminal from the rectifying diode CR301 to form an output positive terminal of the charging source V1 with lower voltage of the multi-step voltage charging source PS200; the intermediate output connector T10 forms a common negative electrode; and in the circuit described above, both of the rectifying diodes CR301 and CR302 is provided in reverse direction for the negative electrode output terminals of both rectifying diodes CR301 and CR302 to form various voltage outputs with the intermediate output connector T10 functioning as the common positive electrode. The voltage step of the multi-step voltage charging source PS200 is of two or more than two steps and the number of the adapted rectifying diode is increased accordingly.

28. A charging device with a multi-step voltage charging source as claimed in Claim 2, wherein, a multi-step voltage charging source PS200 of two or more than two steps is comprised of a 3-phase transformer T300 contains 3-phase input windings WOR, WOS and WOT, and two or more than two units of 3-phase output windings WR, WS and WT of different rated voltage and same or different rated current; the windings of each phase contain output connectors T2R, T2S and T2T of higher voltage and output connectors T1R, T1S and T1T of lower voltage; and windings of each phase are connected to one another by a common connector T10; within, the output connectors of lower voltage and the output connectors of higher voltage from each phase is as required connected in series with a resistance Z1' before being connected to a rectifying diode CR301 and another rectifying diode CR302. Output terminals of the output connectors T1R, T1S and T1T of lower voltage are respectively conducted to the rectifying diode CR301 and Output terminals of the output connectors T2R, T2S and T2T of higher voltage are respectively conducted to the rectifying diode CR302; an output positive terminal of a charging source V2 with higher voltage of the multi-step voltage charging source is comprised of the positive electrode output terminal from the rectifying diode CR302; an output positive terminal of a charging source V1 with lower voltage of the multi-step voltage charging source PS200 is comprised of the positive electrode output terminal from the rectifying diode CR301; and a negative electrode output terminal is comprised of the common connector T10 for the windings of each phase; in the circuit described above, both of the rectifying diodes CR301 and CR302 is provided in reverse direction for the negative electrode output terminals of both rectifying diodes CR301 and CR302 to form output negative terminals of various voltages with the common output connector T10 of windings of each phase functioning as the positive electrode output terminal; and the voltage step of the multi-step voltage charging source PS200 is of two or more than two steps and the number of the adapted rectifying diode is increased accordingly.

29. A charging device with a multi-step voltage charging source as claimed in Claim 2, wherein, a multi-step voltage charging source PS200 of two or more than two steps is comprised of a 3-phase transformer T300 contains 3-phase input windings WOR, WOS and WOT, and two or more than two units of 3-phase output windings of same or different rated voltage and same or different rated current; one of those units of 3-phase output windings contains output connectors W1R, W1S and W1T of lower voltage and a common connector T101 while the other unit of the 3-phase output windings contains output connectors W2R, W2S and W2T of higher voltage output and a common connector T102; and the output connector of each unit of the output windings is as required connected in series with a resistance Z1'; within, the output windings W1R, W1S and W1T of lower voltage are respectively outputted to a rectifying diode CR301 to form a positive electrode output terminal of a charging source V1 of lower voltage output and a negative electrode output terminal is formed by the common connector T101. Another unit of output windings W2R, W2S and W2T of higher voltage are respectively outputted to a rectifying diode CR302 to form a positive electrode output terminal of a charging source V2 of higher voltage output and the negative electrode output terminal is formed by the common connector T102. Both DC output terminals of lower voltage and higher voltage indicate positive sequence connection in series while a common negative electrode is formed by a DC negative electrode output terminal from either unit of the output windings; a positive electrode output terminal of the charging source V1 with lower voltage is comprised of incorporating connectors in positive sequent series connection among the DC output terminals of the lower voltage and the higher voltage while the positive electrode output terminal of the charging source V2 with higher voltage is comprised of those DC positive electrode output terminals from another unit of output windings; and the voltage step of the multi-step voltage charging source PS200 is of two or more than two steps and the number of the adapted bridge type diode is increased accordingly.

30. A charging device with a multi-step voltage charging source as claimed in Claim 2, wherein, a multi-step voltage charging source PS200 of two or more than two steps is comprised of a 3-phase transformer T300 contains 3-phase input windings WOR, WOS and WOT, and two or more than two units of 3-phase output windings WR, WS and WT of different rated voltage and same or different rated current; one of those units of 3-phase output windings contains output connectors W1R, W1S and W1T of lower voltage and a common connector T101 for windings of each phase with lower voltage; the other unit of the 3-phase output windings contains output connectors W2R, W2S and W2T of higher voltage output and a common connector T102 for windings of each phase with higher voltage; output connectors W1R, W1S ,W2T and W2R, W2S, W2T of each unit of the output windings is as required respectively connected in series with a resistance Z1'before being respectively connected to a rectifying diode CR301 and another rectifying diode CR302; within, the output terminals of the output windings W1R, W1S and W1T of lower voltage are respectively conducted to the rectifying diode CR301 and the output terminals of the output windings W2R, W2S and W2T of higher voltage are respectively conducted to the rectifying diode CR302; those positive electrode output terminals from the rectifying diode CR302 are connected to form an output terminal with higher voltage of the multi-step voltage charging source PS200 and those positive electrode output terminals from the rectifying diode CR301 are connected to form an output terminal with lower voltage of the multi-step voltage charging source PS200; meanwhile, both of the common connectors T101 and T102 from windings of each phase with lower voltage and higher voltage are connected to each other to from a common output terminal of negative electrode; and in the circuit described above, both of the rectifying diodes CR301 and CF302 is provided in reverse direction for the common connection terminal output of negative electrode of the rectifying diode CR301 and the common connection output terminals of negative electrode of the rectifying CR302 to form output terminals of various voltages while both of the common connectors T101 and T102 from windings of each phase with lower voltage and higher voltage are connected to each other to from a common output terminal of positive electrode; and the voltage step of the multi-step voltage charging source PS200 is of two or more than two steps and the number of the adapted bridge type diode is increased accordingly.

31. A charging device with a multi-step voltage charging source as claimed in Claim 2, wherein, a multi-step voltage charging source PS200 of two or more than two steps is comprised of a 3-phase transformer T300 contains 3-phase input windings WOR, WOS and WOT, and two or more than two units of 3-phase output windings of same or different rated voltage and same or different rated current one of those units of 3-phase output windings contains output connectors W1R, W1S and W1T of lower voltage while the other unit of the 3-phase output windings contains output connectors W2R, W2S and W2T of higher voltage output; the output connectors W1R, W1S W1T and W2R, W2S, W2T of each unit of the output windings is as required connected in series with a resistance Z1'; within, the output windings W1R, W1S and W1T of lower voltage are respectively outputted to a bridge type rectifier BR301 and further to the positive electrode and negative electrode output terminals of a charging source V1 of lower voltage while the other unit of output windings W2R, W2S and W2T of higher voltage are outputted to a bridge type rectifier BR302 and further to positive electrode and negative electrode of a charging source V2 of higher voltage; DC output terminals of both charging sources V1 and V2 respectively with lower and higher voltages are connected in positive-sequence series with a DC negative electrode output terminal from either set of the output windings functioning as a common negative electrode; a positive electrode output terminal of the charging source V1 with lower voltage is comprised of a structure of incorporated connectors connected in positive-sequence series among the DC output terminals of lower and higher voltages while the DC positive electrode output terminals from the other unit output winding form a positive electrode output terminal of charging source V2 with higher voltage; and the voltage step of the multi-step voltage charging source PS200 is of two or more than two steps and the number of the adapted bridge type diode is increased accordingly.

32. A charging device with a multi-step voltage charging source as claimed in Claim 2, wherein, a multi-step voltage charging source PS200 of two or more than two steps is comprised of a 3-phase transformer T300 contains 3-phase input windings WOR, WOS and WOT, and two or more than two units of 3-phase output windings of same or different rated voltage and same or different rated current; one of those units of 3-phase output windings contains output connectors W1R, W1S and W1T of a charging source V1 with lower voltage, and the other unit of output winding contains output connectors W2R, W2S and W2T of the output winding with higher voltage; the output connectors W1R, W1S, W1T and W2R, W2S, W1T of each unit of the output windings is as required connected in series with a resistance Z1'; within, the output windings W1R, W1S and W1T of lower voltage are outputted to a bridge type rectifier BR301 to further output the positive electrode and the negative electrode output terminals of the charging source V1 with lower voltage; the other unit output windings W2R, W2S and W2T with higher voltage are outputted to a bridge type rectifier BR302 to further output the positive electrode and the negative electrode output terminals of the charging source V2 with higher voltage; and those negative electrode output terminals of the DC output terminals from both of the charging source V1 with lower voltage; the charging source V2 with higher voltage are connected to form a common negative electrode; those DC output terminals of positive electrode with lower voltage form a positive electrode output terminal of the charging source V1 with lower voltage; and those DC output terminals of positive electrode from the other output winding with higher voltage form a positive electrode output terminal of the charging source V2 with higher voltage; and those positive and negative electrodes described above is alternatively replaced by each other so that a common positive electrode is comprised of the positive electrode terminal with lower voltage connected to the positive electrode terminal with higher voltage, while those negative electrode terminals with both lower and higher voltages respectively for a negative electrode for various voltage steps; and those output terminals of lower voltage and higher voltage indicate positive sequence connection in series while a common negative electrode is formed by a DC negative electrode output terminal from either unit of the output windings; and the voltage step of the multi-step voltage charging source PS200 is of two or more than two steps and the number of the adapted bridge type diode is increased accordingly.

33. A charging device with a multi-step voltage charging source as claimed in Claim 2, wherein, a multi-step voltage charging source PS200 of two or more than two steps is comprised of a multi-step voltage charging source PS200' with relay function comprised of one unit or more than one unit of (dis)chargeable storage discharging devices ESD200" and ESD200' provided with relay function and connected in series is provided between the multi-step voltage charging source PS200 and an output load for the charging device with multi-step voltage charging source; the multi-step voltage charging source PS200' provided with relay function is adapted to an individual load having a capacity greater, smaller or equal to that of the multi-step voltage charging source PS200. Additional to a resistance device Z1' is connected in series as required, an inverse voltage prevention diode CR200" is provided between the charging source with higher voltage V2 of the multi-step voltage charging source PS200 and the charging source V2' of the (dis)chargeable storage discharging device ESD200' with relay function; and the inverse voltage prevention diode CR200" is an optional device to be provided for connection in positive-sequence series with the output terminal of the charging source V2 with higher voltage to prevent current flowing in opposite direction, or as required one or more than one inverse voltage prevention diodes connected in series or serial-parallel to regulate the output voltage from its DC source by means of a positive-sequence drop; as required, a resistance device Z0' and a inverse voltage prevention diode CR200' is connected in series between the charging sources V1 and V1' with loser voltage respectively from the (dis)chargeable storage discharging device ESD200" provided with relay function and the multi-step voltage charging source PS200. The inverse voltage prevention diode CR200' is an optional device to be positive-sequence connected in series with the output terminal of the charging source V1 with lower voltage or with the output terminal from other voltage with lower step to prevent current flowing in opposite direction; or as required, one or more than one inverse voltage prevention diodes connected in series or series-parallel are provided to regulate the output voltage of DC source by means of positive-sequence drop.

34. A charging device with a multi-step voltage charging source as claimed in Claim 2, wherein, a multi-step voltage charging source PS200 of two or more than two steps is comprised of one unit or more than one unit of multi-step voltage charging source PS200' provided with relay function is connected in parallel with the multi-step voltage charging source PS200, then is further outputted to the load thought the negative electrodes from the output terminal of the charging source V2' with higher voltage and the output terminal of the charging V1 with lower voltage of the multi-voltage charging source PS200' provided with relay function, or to be inputted into an optional center control unit CCU200' for control of relay function before being outputted to the load; the central control unit CCU200' for relay function relates to a device containing mechanic-electronic switch or solid-state power switch comprised of a drive circuit to control the operation of DC output voltage conversion, On-Off operation or timed cutoff, that is to control the multi-step voltage DC sources from the multi-step voltage charging source PS200' provided with relay function by means of its internal mechanic-electronic switch or solid-state power switch for conversion into multi-step DC output voltage as required; or to control the On-Off operation or timed cutoff by controlling the operation of the drive circuit so to control the operation of the primary control switch SW1 comprised of solid-state analog or switching device, or of mechanic-electronic switching device or of constantly closed thermal temperature switch, thus further to execute On-Off operation and timed cutoff output to the charging DC source.
